# EUROPÄISCHE PATENTSCHRIFT

(11) **EP 2 056 358 B1**
(45) Veröffentlichungstag und Bekanntmachung des Hinweises auf die Patenterteilung: **28.03.2012**
(21) Anmeldenummer: 09000471.4
(22) Anmeldetag: 23.10.2006
(51) Int. Cl.: H01L 31/042, H01L 31/048

(54) **Photovoltaikmodul mit einem Halterahmen aus Kunstoff**
Photovoltaic module with plastic support frame
Module photovoltaïque avec support en plastique

(30) Priorität: 21.10.2005 DE 102005050883; 21.10.2005 DE 102005050884
(43) Veröffentlichungstag der Anmeldung: 06.05.2009
(62) Teilanmeldung aus: 06807487.1
(73) Patentinhaber: Ubbink B.V., 6984 AA Doesburg (NL)
(72) Erfinder: Kamp, Viktor Michael, 40477 Düsseldorf (DE); Rewig, Thomas, 06886 Lutherstadt Wittenberg (DE); Dirfenbach, Karl Heinz, 86899 Landsberg a.L. (DE); Tibitanzl, Johannes, 97262 Erbshausen (DE)
(74) Vertreter: Blasberg, Tilo

(56) Entgegenhaltungen:
- EP-A1- 0 500 066
- EP-A1- 0 999 601
- EP-A2- 0 977 274
- WO-A-01/75377
- US-A- 5 571 338

## Beschreibung

### Gebiet der Erfindung

Die vorliegende Erfindung betrifft allgemein Photovoltaikmodule mit einem Halterahmen aus einem Kunststoff, beispielsweise zur Verwendung für die Gestaltung von Dacheindeckungen oder Fassadenflächen, und betrifft ferner ein Solarstromsystem mit einer Mehrzahl von solchen Photovoltaikmodulen.

### Hintergrund der Erfindung

Photovoltaikmodule der vorgenannten Art wandeln Strahlungsenergie in elektrische Energie. Um den vielfältigen Anforderungen bei der Erstellung von Solaranlagen gerecht zu werden, werden die Solarzellen in einem Verbund aus mehreren Materialien und Bauteilen eingebettet, der insbesondere für eine praxisgerechte elektrische Anschlussmöglichkeit, für einen Schutz der nicht korrosionsbestündigen Solarzellen vor mechanischen Einflüssen, für einen Schutz von Witterungseinflüssen, für einen Berührungsschutz der elektrisch leitenden Bauteile und für eine einfache Handhabungs- und Befestigungsmöglichkeit sorgen soll. Damit Photovoltaikmodule einfach und flexibel verbaut werden können, beispielsweise auch durch ungelernte Arbeitskräfte, sind auf diesem stark wachsenden technischen Gebiet einfache und robuste Montage- und Verbindungskonzepte gefragt.

Um eine ausreichende mechanische Abstützung zu ermöglichen, ist aus dem Stand der Technik bekannt, ein Photovoltaikmodul in einem mechanisch stabilen Rahmen aus Aluminium oder Kunststoff aufzunehmen und zwischen Rahmen und dem Laminat aus Glas/Solarzellen/Folienverbund ein geeignetes Dichtungs- oder weichlagerungsmaterial vorzusehen.

US 5,578,142 bzw. US 6,172,295 B1 offenbaren ein KunststolT-Rahmenprofil zur Aufnahme eines Photovoltaikmoduls. Zwischen Kunststoffrahmen und einem Verbund aus transparenter Abdeckscheibe und Solarzellen ist eine Klebe- bzw. Haftschicht aus einem Kunststoff durch ein Spritzgussverfahren eingebracht. An einem unteren Auflageschenkel des Halterahmens sind Bohrungen zur Montage des Photovoltaikmoduls vorgesehen. Die dichtende Aufnahme des Materialverbunds aus transparenter Abdeckscheibe und Solarzellen in dem Halterahmen ist dennoch vergleichsweise aufwendig.

Um für eine einfache Rahmenhalterung zu sorgen, versucht man deshalb seit langem, die Rahmenabdichtung aus einem Kunststoff auszubilden, der in geeigneter Weise an den Rand eines Photovoltaikmoduls angespritzt bzw. angeschäumt oder angegossen wird. Dieser Lösungsansatz wird beispielsweise allgemein in der deutschen Offenlegungsschrift DE 28 32 475 beschrieben.

Ein weiterer Lösungsansatz wird in der US 4,830,038 und der entsprechenden US 5,008,062 offenbart. Eine Solarzelle wird gemeinsam mit einer transparenten Abdeckscheibe in eine Spritzgussform eingebracht, die so ausgelegt ist, dass durch Spritzgießen ein das Photovoltaikmodul umgreifender Rahmen ausgebildet wird. Als Material wird insbesondere Polyurethan offenbart. In den Kunststoffrahmen können gleichzeitig auch elektrische Verbindungsmittel, nämlich Steckverbinder, durch Spritzgießen integriert werden. Für die Zeit nach der Montage müssen Kräfte, insbesondere hervorgerufen durch Windsog, einkalkuliert werden, für deren Übertragung zum mechanischen Verbindungsmittel der Kunststoffrahmen alleine nur schwer sorgen kann. Ferner sind zur Montage eines solchen Photovoltaikmoduls zusätzliche Befestigungselemente erforderlich. Ein solches Photovoltaikmodul wird deshalb üblicherweise in einem Aluminium- oder Kunststoffrahmen verbaut, was die Kosten weiter erhöht.

US 5,743,970 offenbart ein weiteres Photovoltaikmodul, bei dem auf die Rückseite der Solarzellen ein Polymer angespritzt wird, um das Modul einzukapseln. Offenbart ist auch, dass die Kunststorf-Ruckseite geeignete Strukturen, beispielsweise ein Gehäuse, ausbilden kann.

Photovoltaikmodule, die aus einem mehrschichtigen Verbundkörper bestehen, werden ferner in DE 198 14 652 A1, DE 198 14 653 A1 und DE 202 20 444 U1 offenbart. Mindestens eine Schicht besteht dabei aus einem Polycarbonat und mindestens eine weitere Schicht aus einem fluorhaltigen Polymer.

DE 101 05 718 B4 offenbart ein Solarstromsystem mit einer Mehrzahl von PhotovoltaikModulen, bei dem U-förmige Tragprofile eine Tragstruktur bilden, in die die Photovoltaikmodule vertikal oder schräg hängend montiert werden können. Auf der Rückseite der Photovoltaikmodule sind Einhänghaken angeordnet, die in den Bolzen eines Tragprofils eingreifen. Ferner sind an der Rückseite der Photovoltaikmodule Anschlussstecker vorgesehen, Beim Einhängen der Photovoltaikmodule in die Tragprofile werden im Rahmen des Montagevorgangs zusammensteckbare Verbindungsstecker zur elektrischen Verschaltung der Photovoltaikmodule zusammengesteckt.

DE 41 40 683 A1 und DE 41 40 682 A1 offenbaren ein Solarstromsystem, bei dem die Photovoltaikmodule einen aus einem Kunststoff ausgebildeten Halterahmen aufweisen, der an allen vier Seiten einen Verbindungsflansche aufweist, auf deren Auflagefläche als Vertiefungen ausgebildete Stecker vorgesehen sind. Zur Verbindung der Photovoltaikmodule dienen Leisten, welche die Verbindungsflansche teilweise überdecken und eine Kontaktstiftanordnung aufweisen, die in den zugeordnete Stecker eines benachbarten Photovoltaikmoduls eingreifen. In den Leisten sind Durchgangsbohrungen vorgesehen, die von Schrauben zur Verbindung mit einer Dach- oder Fassadenkonstruktion durchgriffen werden. Die Verbindungsflansche erfordern jedoch eine gewisse Breite, was zu einem geringen Wirkungsgrad des Systems führt. Die Montage des Systems ist vergleichsweise aufwändig, da die Leisten festgeschraubt werden müssen.

Bei dieser Anordnung sind jedoch die Solarzellen in der Mitte zwischen einer Außenscheibe und einer Innenscheibe angeordnet, werden also nicht von einer von einem Halterahmen getragenen transparenten Abdeckscheibe gehalten.

EP 1 662 581 A1, die nachveröffentlichten Stand der Technik gemäß Art. 54 (3) EPÜ darstellt, offenbart ein als Wandverkleidungsplatte ausgestaltetes Photovoltaikmodul mit einem als angespritzten oder angeschäumten Kunststoffrahmen ausgebildeten Halterahmen, in den Mittel zur Befestigung an einer Wandverkleidungsplatte einer Gebäudeaußenwand integriert sind. Der Kunststoffrahmen weist im Randbereich wechselweise auf gegenüberliegenden Seiten zueinander komplementäre Elemente für einen formschlüssigen Eingriff oder eine formschlüssige Überdeckung benachbarter Wandverkleidungsplatten auf, sodass die Gesamtheit der Wandverkleidungsplatten nach außen hin eine glatte Fläche ausbilden. Der Halterahmen ist jedoch im Profil nicht quaderförmig ausgebildet. Eine äußere Seitenfläche des Halterahmens ragt auch nicht rechtwinklig von einer Oberseite des Photovoltaikmoduls ab, da so der erforderlich formschlüssige Eingriff oder die formschlüssige Überdeckung mit benachbarten Wandverkleidungsplatten nicht bewerkstelligt werden könnte.

EP 0 977 274 A2 offenbart ein Photovoltaikmodul gemäß dem Oberbegriff von Patentanspruch 1. Der Halterahmen wird allerdings von im Profil klammerartig ausgebildeten Halteschienen ausgebildet, die miteinander zu dem Halterahmen verbunden sind, wobei die Halteschienen C-formige Klemmabschnitte umfassen, welche den Rand der Abdeckscheibe klammerartig umgreifen. Der obere Rand des Halterahmen schließt somit nicht bündig mit der Abdeckscheibe ab.

### Zusammenfassung der Erfindung

Aufgabe der vorliegenden Erfindung ist es, ein einfach zu montierendes Photovoltaikmodul mit einem ansprechenden Aussehen bereitzustellen, bei dem ein Schmutzbefall und/oder Moosbefall weitestgehend vermieden werden kann. Gemäß einem weiteren Gesichtspunkt der vorliegenden Erfindung soll ferner ein Solarstromsystem mit einer Mehrzahl solcher Photovoltaikmodule bereitgestellt werden.

Diese und weitere Aufgaben werden gemäß der vorliegenden Erfindung durch ein Photovoltaikmodul mit den Merkmalen nach Anspruch 1 sowie durch ein Solarstromsystem mit den Merkmalen nach Anspruch 12 gelöst. Weitere vorteilhafte Ausführungsformen sind Gegenstand der rückbezogenen Ansprüche.

Ein Photovoltaikmodul gemäß der vorliegenden Erfindung ist jeweils am Rand zumindest abschnittsweise von einem Halterahmen, der aus einem Kunststoff und bevorzugter aus einem elastomeren Kunststoff ausgebildet ist, eingefasst, wobei in den Halterahmen mechanische Verbindungsmittel sowie zumindest ein Verbindungsstecker integriert sind und die mechanischen Verbindungsmittel jeweils formschlüssig mit einem zugeordneten Halteelement zusammenwirken. Der Halterahmen trägt eine transparente Abdeckscheibe mit einer Mehrzahl von Solarzellen, die mit der transparenten Abdeckscheibe verbunden sind. Erfindungsgemäß schließt ein oberer Rand des Halterahmens bündig mit der transparenten Abdcckscheibe ab. Durch diese einfache Maßnahme kann erfindungsgemäß ein Schmutzbefall und/oder Moosbefall weitestgehend vermieden werden, einschließlich einer Vereisung oder eines unerwünschten Anhaftens von Schnec in den Randbereichen des Halterahmens, was zu einer unerwünschten Abschattung von Solarzelle führen würde.

Der formschluss sowie die die Integration sowohl der mechanischen Verbindungsmittel als auch der Verbindungsstecker in den Kunststoff-Halterahmen ermöglicht erfindungsgemäß eine präzise und zuverlässige Befestigung und elektrische Verschaltung der Photovoltaikmodule. Der Halterahmen kann durch Spritzgießen oder formwerkzeuggestütztes Anspritzen mit sehr geringen Toleranzen hergestellt werden. Somit können die Photovoltaikmodule erfindungsgemäß ohne größeren Aufwand an den Montageträgern ausgerichtet und befestigt werden.

Gemäß einer weiteren Ausführungsform sind die mechanischen Verbindungsmittel mit den Halteelementen lösbar verrastet oder verriegelt. Dadurch können erfindungsgemäß Haltekräfte noch präziser vorgegeben werden, die auch die Kontaktkraft zur Ausbildung der elektrischen Steckverbindung bestimmen. Dabei kann durch die Verrastung oder Verriegelung eine Mindestkraft vorgegeben werden, die ausreichend ist, um die elektrischen Steckverbindungen zur Verschaltung der Photovoltaikmodule zu bewerkstelligen. Ferner kann gemäß einer weiteren Ausführungsform durch geeignete Verrastung eine mechanische Vorspannung der Photovoltaikmodule gegen zugeordnete Halteelemente bzw. Montageträger erzielt werden.

Gemäß einem weiteren Gesichtspunkt der vorliegenden Erfindung wird ferner ein Solarstromsystem bereitgestellt, das zumindest einen Montageträger und eine Mehrzahl von Photovoltaikmodulen der vorgenannten Art umfasst, die auf den oder die Montageträger montiert sind und elektrisch miteinander in geeigneter Konfiguration verschaltet sind, und zwar in Anpassung sowohl an elektrische Erfordernisse als auch an die baulichen Gegebenheiten einer Dachabdeckung oder Fassade, auf die das Solarstromsystem montiert ist.

Dabei kann der Montageträger rahmenartig ausgebildet sein, mit einer Mehrzahl von in einer Matrixanordnung vorgesehenen Feldern zur Aufnahme eines jeweiligen Photovoltaikmoduls. Gemäß einer weiteren Ausführungsform bilden parallel zueinander auf die Dachabdeckung oder Fassade montierte Profile den Montageträger aus. Ferner umfasst das Solarstromsystem eine Mehrzahl von Halteelementen zum Halten der Photovoltaikmodule an den Montageträgern sowie eine Mehrzahl von Verbindungselementen zum elektrischen Verschalten der Photovoltaikmodule.

Gemäß einer weiteren Ausführungsform sind Bypass-Dioden in oder an dem jeweiligen Montageträger vorgesehen. Dadurch wird eine räumliche Trennung zu den Solarzellen erzielt, so dass eine Erwärmung der Bypass-Dioden nicht unmittelbar zu einer Erwärmung der Solarzellen und somit zu einer Verringerung des fotoelektrischen Wirkungsgrads führt. Das Solarstromsystem gemäß der vorliegenden Erfindung kann somit mit höherem Wirkungsgrad betrieben werden.

Eine Anordnung der Bypass-Dioden in dem Montageträger kann insbesondere dann einfach realisiert werden, wenn der Montageträger als Hohlprofil ausgebildet ist, dessen Hohlraum von der Außenseite her ohne weiteres zugänglich ist. Gemäß einer bevorzugten Ausführungsform sind die Bypass-Dioden jeweils unmittelbar an dem Montageträger vorgesehen. Zum Schutz vor Umwelteinflüssen und zum Erleichtern einer elektrischen Kontaktierung wird es dabei bevorzugt, die Bypass-Dioden in einem gesondertem, mit elektrischen Steckverbindern oder dergleichen verschenen Gehäuse unterzubringen, das jeweils unmittelbar an dem Montageträger angeordnet bzw. montiert ist.

Dieses Gehäuse ist gemäß einer ersten Ausführungsform gesondert zu den Halteelementen ausgebildet. Gemäß einer weiteren Ausführungsform kann ein solches Gehäuse jedoch auch gleichzeitig als Verbindungs- bzw. Halteelement dienen, das an einer vorbestimmten Stelle in Entsprechung zu der elektrischen Verschaltung der Photovoltaikmodule an einem Montageträgcr montiert ist, so dass die Photovoltaikmodule von den Verbindungselementen gehalten sind.

Besonders bevorzugt sind die Montageträger dabei so ausgelegt, dass die Verbindungselemente dabei an beliebigen Stellen an den zugeordneten Montageträgern befestigt werden können, insbesondere stufenlos verschiebbar sind. Gemäß einer weiteren Ausführungsform können die Verbindungselemente an vorbestimmten Stellen in dem zugeordneten Montageträger eingerastet werden. Zu diesem Zweck können an dem Montageträger in geeignetem Rastermaß, das auf die geometrischen Abmessungen der aufzunehmenden Photovoltaikmodule abgestimmt ist, Verrastungselemente vorgesehen sein, in welche die Verbindungselemente jeweils eingerastet werden können. Während der Montage müssen somit nur noch diese Verrastungsstellen gesucht werden. Die Verbindungselemente können somit praktisch nicht mehr unter falschen Abständen montiert werden, was die Geschwindigkeit und Zuverlässigkeit der Montage auch durch ungelernte Arbeitskräfte deutlich erhöht.

Gemäß einer weiteren Ausführungsform sind die Montageträger als Endlosprofile ausgebildet, beispielsweise mit einem quadratischen oder rechteckigförmigen Querschnitt. Dabei können die Endlosprofile mit zumindest einer in Längsrichtung verlaufenden Vertiefung bzw. Nut und/oder mit zumindest einem sich in Längsrichtung erstreckenden Vorsprung ausbebildet sein, in die korrespondierend, ausgebildete Verrastungsmittel der Verbindungselemente eingreifen. Die Längsvertiefung bzw. -erhebung kann dabei mit einem geeigneten Profil zum sicheren Halten der Verbindungselemente ausgebildet sein, insbesondere als T-Nut.

Bei einer Matrixanordnung von Photovoltaikmodulen müssen wahlweise horizontal oder vertikal zueinander benachbarte Photovoltaikmodule miteinander verschaltet werden. Um eine solche Verschaltung zu gewährleisten, sind gemäß einer weiteren Ausführungsform die mechanischen Verbindungsmittel und/oder der bzw. die Verbindungsstecker auf einander gegenüberliegenden Längsseiten des rechteck förmigen oder quadratischen Photovoltaikmoduls an identischen Positionen so vorgesehen, dass die Photovoltaikmodule wahlweise in unterschiedlichen Drehstellungen auf die Montageträger montiert werden können, um eine geeignete elektrische Verschaltung der Photovoltaikmodule in Entsprechung zu deren jeweiliger Drehstellung zu ermöglichen.

Insbesondere können die mechanischen Verbindungsmittel und/oder der bzw. die Verbindungsstecker auf einander gegenüberliegenden Längsseiten des rechteckförmigen oder quadratischen Photovoltaikmoduls an identischen Positionen so vorgesehen sein, dass in einer ersten Drehstellung eine elektrische Verbindung zu einem horizontal benachbarten Photovoltaikmodul ausgebildet werden kann und in einer zweiten, unterschiedlichen Drehstellung, die bevorzugt um 180° retativ zu der ersten Drehstellung verdreht ist, eine elektrische Verbindung zu einem vertikal benachbarten Photovoltaikmodul ausgebildet werden kann.

Gemäß einer weiteren Ausführungsform kann in das Kunststoffmaterial des Halterahmens ferner ein Verankerungs- bzw. Rückhaltermittel integriert sein, um ein Abreißen der vorgenannten Verbindungs- und/oder Ausrichtmittel von bzw. aus dem Halterahmen zu verhindern, etwa im Falle eines Windsogs nach der Montage. Ein solches Verankerungsmittel kann insbesondere als in den Halterahmen integriertes Profil ausgebildet sein, das sich zumindest abschnittsweise in Umfangsrichtung des Halterahmens erstreckt und in das die Verbindungs- und/oder Ausrichtmittel eingreifen, um an dem Halterahmen zurückgehalten zu werden.

Gemäß einer weiteren Ausführungsform umfasst das Solarstromsystem weiterhin zumindest ein auch unabhängig beanspruchbares Wechselrichter-Modul, das im äußeren Erscheinungsbild identisch zur den Photovoltaikmodulen ausgebildet ist und an geeigneter Stelle in der Anordnung von Photovoltaikmodulen auf den Montageträger montiert ist. Somit betrifft dieser weitere Gesichtspunkt der vorliegenden Erfindung insbesondere ein Wechselrichter-Modul für ein Solarstromsystem der vorgenannten Art.

Während Wechsclrichter-Module gemäß dem Stand der Technik üblicherweise beabstandet zur Anordnung von Photovoltaikmodulen vorgesehen sind, was den Einbau mehrerer vergleichsweise hochpreisiger Gleichstromleitungen notwendig macht, können so erfindungsgemäß Leitungswege zwischen dem Wechselrichter-Modul und den Photovoltaikmodulen minimiert und preislich günstiger gestaltet werden. Da das Wechselrichter-Modul äußerlich nicht von den Photovoltaikmodulen zu unterscheiden ist, kann dieses an beliebiger Stelle in der Anordnung von Photovoltaikmodulen angeordnet werden, so dass das erfindungsgemäße Solarstromsystem noch flexibler an elektrische Erfordernisse und bauliche Gegebenheiten angepasst werden kann.

Bevorzugt ist das Wechselrichter-Modul somit vom mechanischen Aufbau identisch zu den Photovoltaikmodulen ausgebildet und insbesondere in identischer Weise auf die Montageträger montiert, wie vorstehend beschrieben.

Gemäß einer weiteren Ausführungsform weist dabei das Wechselrichter-Modul insbesondere eine Abdeckscheibe auf, die farblich abgestimmt ist auf die transparente Abdeckscheibe mit der darunter befindlichen, mit einer Rückseitenfolie bzw. -beschichtung versehenen Solarzellen-Anordnung eines Photovoltaikmoduls. Unter farblicher Abstimmung ist dabei insbesondere eine identische farbliche Gestaltung oder eine wenig kontrastierende farbliche Gestaltung zu verstehen, so dass sich das Wechselrichter-Modul harmonisch in die Anordnung von Photovoltaikmodulen einfügt, ohne als stören empfunden zu werden. Beispielsweise könnte das Wechselrichter-Modul eine gräulich schimmernde Oberfläche aufweisen und /oder die Abdeckscheibe über dem Wechselrichter-Modul eine entsprechend den Photovoltaikmodulen leicht bläulich schimmernde Oberfläche aufweisen, während die Abdeckscheibe über Photovoltaikmodule üblicherweise eine leicht bläulich schimmernde Oberfläche aufweisen, was jedoch von den für die Solarzellen verwendeten Materialien abhängt.

Ein weiterer Gesichtspunkt der vorliegenden Erfindung betrifft ferner ein Verfahren zur Montage eines Solarstromssystems, wie ausführlicher beschrieben.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: in einer perspektivischen Explosionsansicht einen Ausschnitt aus einem Solarstromsystem gemäß einer ersten Ausführungsform der vorliegenden Erfindung;
- Fig. 2a und 2b: in einer perspektivischen Darstellung ein Halteelement des Solarstromsystems gemäß der Fig. 1;
- Fig. 3a bis 3c: in einer Draufsicht, einer perspektivischen Draufsicht und einer Seitenansicht ein elektrisches Verbindungselement des Solarstromsystems gemäß der Fig. 1;
- Fig. 4a bis 4d: einen Eckbereich eines Halterahmens des Solarstromsystems gemäß der Fig. 1 in einer Ansicht von unten, in einer perspektivischen Draufsicht, in einer Seitenansicht und einer Schnittansicht;
- Fig. 5 in: einer teilperspektivischen Explosionsansicht einen als Endlosprofil ausgebildeten Montageträger mit einem Verbindungselement gemäß einer zweiten Ausführungsform der vorliegenden Erfindung;
- Fig. 6: das System gemäß der Fig. 5 in einem montierten Zustand;
- Fig. 7: ein entsprechendes System gemäß einer Modifikation der leiten Ausführungsform der vorliegenden Erfindung;
- Fig. 8: in einem schematischen Teilschnitt ein Photovoltaikmodul mit einem in den Halterahmen auf der Rückseite integrierten Anschlussstecker und einer korrespondierenden Verbindungsbuchsc eines elektrischen Verbindungselements in einem Solarstromsystem gemäß der vorliegenden Erfindung;
- Fig. 9a: eine beispielhafte elektrische Stringverschaltung eines Wechselrichter-Moduls mit fünfzehn Photovoltaikmodulen auf einer quadratischen Grundfläche;
- Fig. 9b: in einer schematischen Draufsicht ein Photovoltaikmodul mit Anschlusssteckern gemäß der vorliegenden Erfindung;
- Fig. 9c: in einer Draufsicht ein Wechselrichter-Modul gemäß der vorliegenden Erfindung mit daran vorgesehenen Anschlusssteckern;
- Fig. 10: eine beispielhafte elektrische Stringverschaltung eines Wechselrichter-Moduls mit fünfzehn Photovoltaikmodulen auf einer quadratischen Grundfläche gemäß einer weiteren Ausführungsform der vorliegenden Erfindung, wobei zwei verschiedene alternativ realisierbar des Wechselrichter-Moduls überlagernd dargestellt sind;
- Fig. 11: in einer Draufsicht ein Wechselrichter-Modul bei der Ausführungsform gemäß der Fig. 10 mit daran vorgesehenen Anschlusssteckern;
- Fig. 12: in einem schematischen Querschnitt ein Wechselrichter-Modul gemäß der vorliegenden Erfindung;
- Fig. 13: in einer perspektivischen Explosionsdarstellung ein Photovoltaikmodul gemäß der vorliegenden Erfindung;
- Fig. 14: in einer schematischen Schnittansicht das Photovoltaikmodul gemäß der Fig. 13 mit einem mechanischen Ausricht- und Verbindungsmittel; und
- Fig. 15a- 15c: Einzelschritte eines Verfahrens zur Herstellung des Photovoltaikmoduls gemäß der vorliegenden Erfindung.

In den Figuren bezeichnen identische Bezugszeichen identische oder im Wesentlichen gleich wirkende Elemente oder Elementgruppen.

### Ausführliche Beschreibung von bevorzugten Ausführungsbeispielen

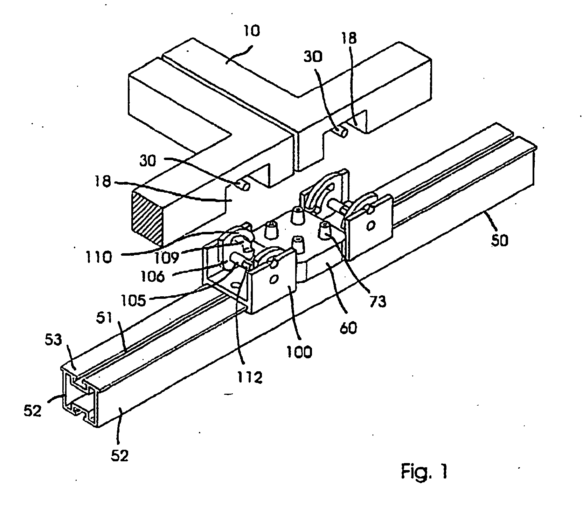

Die Fig. 1 zeigt in einer perspektivischen Explosionsansicht einen Ausschnitt aus einem Solarstromsystem gemäß einer ersten Ausführungsform der vorliegenden Erfindung. Dieses umfasst mehrere parallel und beabstandet zueinander oder rahmcnartig angeordnete Montageträger 50, auf denen Halteelemente 100 und als elektrische Verbindungselemente wirkende Doppelbrücken 60 montiert sind. Jeweils vier Halteelemente 100 sichern ein Photovoltaikmodul durch formschlüssiges Verrasten bzw. Verriegeln von in den Eckbereichen des Halterahmens befindlichen Haltezapfen 30, wie nachfolgend beschrieben. Beim Verriegeln der Haltezapfen 30 werden gleichzeitig in Eckbereichen des Halterahmens auf der Unterseite desselben angeordnete Kontaktstecker bzw. Kontaktbuchsen mit den zugeordneten Kontaktbuchsen bzw. Kontaktsteckern 73 der Doppelbrücke 60 zusammengesteckt, wodurch eine elektrischen Kontaktierung zur Verschaltung von zwei benachbarten Photovoltaikmodulen erzielt wird.

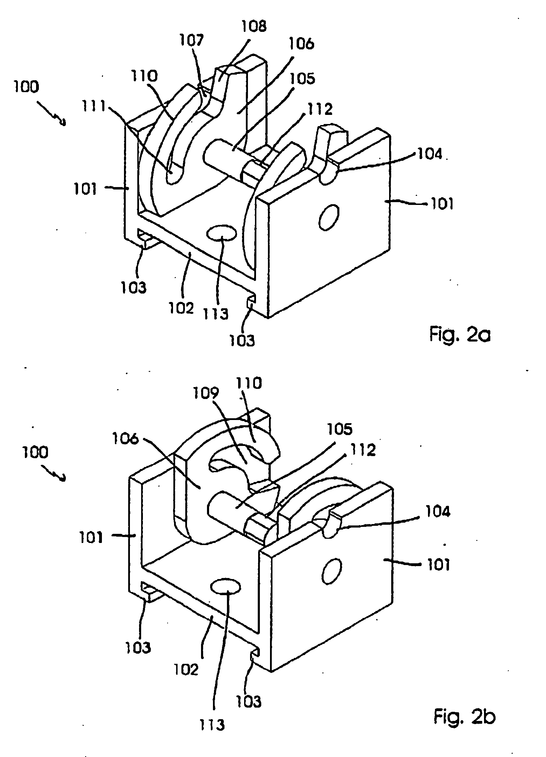

Gemäß der Fig. 1 ist der Montageträger 50. als Endlosprofil mit einem quadratischen Querschnitt ausgebildet, beispielsweise als Aluminium-Strangpressprofil. Auf den - Längsseiten des Montageträgers 50 sind zwei T-Nuten 51 ausgebildet, in die korrespondierend ausgebildete Verrastungselemente eingreifen, wie nachfolgend beschrieben. Bei dem Ausführungsbeispiel gemäß der Fig. 1 ragen die oberen Profilschenkel 53 über die Seitenwände 52 des Endlosprofils 50 hinaus, die von Seitenwänden 101 (vgl. Fig. 2a) und Querstegen 103 der Halteelemente 100 umgriffen werden. Die Halteelemente 100 sind somit von den Montageträgern 50 längsverschieblich in der Art einer Führungsschiene geführt, wobei die Halteelemente 100 in einer Richtung senkrecht zur Längsrichtung der Montageträger 50 mit minimalem Spiel geführt sind und senkrecht nach oben mit einem minimalen oder durch den Abstand der Querstegc 103 zu dem Boden 102 der Halteelemente 100 vorbestimmten Spiel geführt sind. Gemäß der Fig. 2a ist im Boden 102 eine Bohrung 113 ausgebildet, in die eine Senkkopfschraube oder ein vergleichbares Feststellelement mit einem korrespondierend zur T-Nut 51 des Montageträgers 50 ausgebildetem Profilelement, das in diese zur Sicherung der Längsposition des Halteelements 100 eingreift und das Halteelement 100 beim Festziehen der Senkkopfschräube klemmt.

Gemäß den Fig. 2a und 2b ist an einer an den Seitenwänden 101 des Halteelements 100 gelagerten Achse 105 eine von zwei Kurvenelementen 109 gebildete Klaue drehbeweglich gelagert. Dieses kann mittels eines Federelements oder dergleichen in die in der Fig. 2b dargestellte Verriegelungsstellung vorgespannt sein. Gemäß der Fig. 2a ist in den Kurvenelementen 109 eine exzentrische umfängliche Nut 109 ausgebildet, die über eine Einführöffnung 107 mit einer Einführschräge 108 zum Führen des Haltezapfens 30 eines Photovoltaikmoduls nach außen hin geöffnet ist. Ferner sind in den Seitenwänden 101 des Halteelements 100 zwei halbkreisförmige Aussparungen 104 oberhalb der Drehachse 105 ausgebildet, in welchen zum Verriegeln eines Photovoltaikmoduls jeweils ein senkrecht von einer Seitenfläche des Halterahmens 10 abragender Haltezapfen 10 aufgenommen ist. In der Drehstellung der Klaue gemäß der Fig. 2a befindet sich der Haltezapfen in der Einführöffnung 107 der exzentrischen Nut 109. Die Einführschfäge 108 führt dabei den Haltezapfen 30 zuverlässig in die halbkreisförmige Aussparung 104. Durch den Verlauf der exzentrischen Nut 109 kann ggf. eine mechanischen Vorspannung des Photovoltaikmoduls gegen das Halteelement 100 realisiert werden.

Gemäß der Fig. 1 verbleibt zwischen zwei benachbarten Photovoltaikmodulen ein Spalt und ist die Länge der Drehachse 105 um diese Spaltbreite größer als die doppelte Breite des Halterahmens 10, sodass der auf dem Außenumfang der Drehachse 105 ausgebildete Außensechskant 112 mit einem Werkzeug, beispielsweise einem Schraubschlüssel, das in den Spalt eingreift, betätigt werden kann, um die Drehachse 105 in die in der Fig. 2b gezeigte Drehstellung zu drehen. Dabei wird der Haltezapfen 30 bzw. werden die Haltezapfen 30 von zwei benachbarten Photovoltaikmodulen in der exzentrischen Nut 109 aufgenommen und schließlich in einer von einer Aussparung 104 und dem Boden 111 der Nut 109 gebildeten Aufnahme eng anliegend aufgenommen. Dadurch wird die Lage der Photovoltaikmodule in Längsrichtung der Montageträger 50 sowie in Richtungen senkrecht dazu geschert. Eine solche Ausbildung der Aufnahme ist jedoch selbstverständlich nicht zwingend erforderlich.

Gemäß der Fig. 1 sind die Haltezapfen 30 in rechteckförmigen Aussparungen 30 in Eckbereichen der Halterahmen 10 angeordnet und ragen nicht über die Seitenfläche der Halterahmen 10 hinaus. Beim Verriegeln des Haltezapfens 30 in dem Halteelement 100 wird dabei der von der drehbeweglichen Klaue ausgebildete Verriegelungsmechanismus in der Aussparung 30 aufgenommen. In der verriegelten Stellung werden die Halterahmen 10 von einer von den Seitenwänden 101 und dem Boden 102 der Halteelemente 100 ausgebildeten Aufnahme eng anliegend aufgenommen, was zur Erhöhung der Verwindungssteifigkeit beiträgt.

Wie dem Fachmann ohne weiteres ersichtlich sein wird, sind die Halteelemente 100 zwecksmäßig aus einem KunststofT spritzgegossen bzw. abgeformt oder aus einem Metallwerkstoff gefertig.

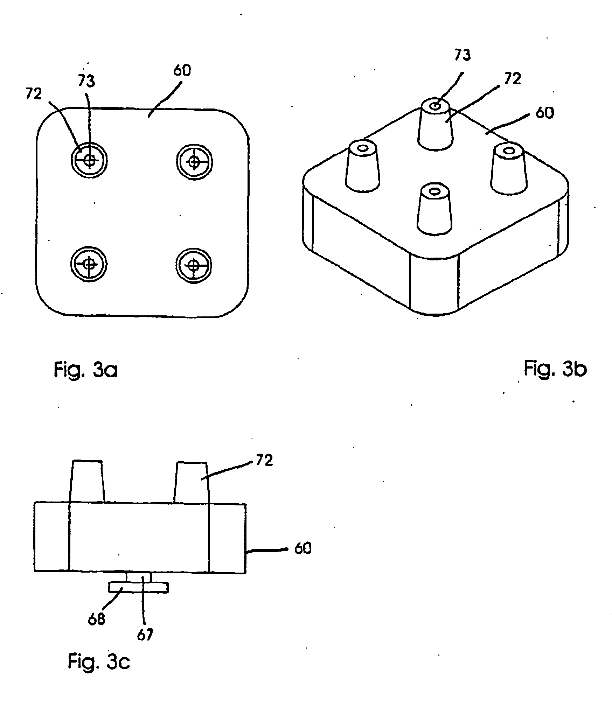

Die Fig. 3a bis 3c zeigen die Doppelbrücke 60 zur elektrischen Verschaltung der Photovoltaikmodule. Auf der Oberseite der Doppelbrücke 60 sind vier Steckerbuchsen 73 in einer quadratischen Anordnung angeordnet. Auf der Unterseite der Doppelbrücke ist ein von einem Vorsprung 67 und einem Quersteg 68 gebildetes Profilelement ausgebildet, das korrespondierend zum Profil der T-Nut 51 (vgl. Fig. 1) der Montageträger 50 ausgebildet ist und in diese eingreift Die Längsposition der zwischen zwei Halteelementen 100 befindlichen Doppelbrücke an dem Montageträgcr 50 wird beim Sichern der Halteelemente 100 automatisch festgelegt. Gemäß einer weiteren Ausführungsform kann die Doppelbrücke einstückig mit den Halteelementen 100 ausgebildet oder mit zumindest einem Halteelement 100 verbunden sein.

Je nachdem, ob zwei vertikal oder horizontal zueinander benachbarten Photovoltaikmodule miteinander verschaltet werden sollen, sind zwei einander in der vertikalen oder horizontalen Richtung gegenüberliegende Kontaktbuchsen 73 der Doppelbrücke in der bekannten Weise miteinander verschaltet, In der Doppelbrücke 60 kann zumindest eine Bypass-Diode vorgesehen sein, die in Sperrrichtung betrieben wird, wenn das zugeordnete Photovoltaikmodul beleuchtet ist. Wie dem Fachmann ohne weiteres ersichtlich sein wird, ist das Gehäuse der Doppelbrücke zweckmäßig aus einem Kunststoff spritzgegossen.

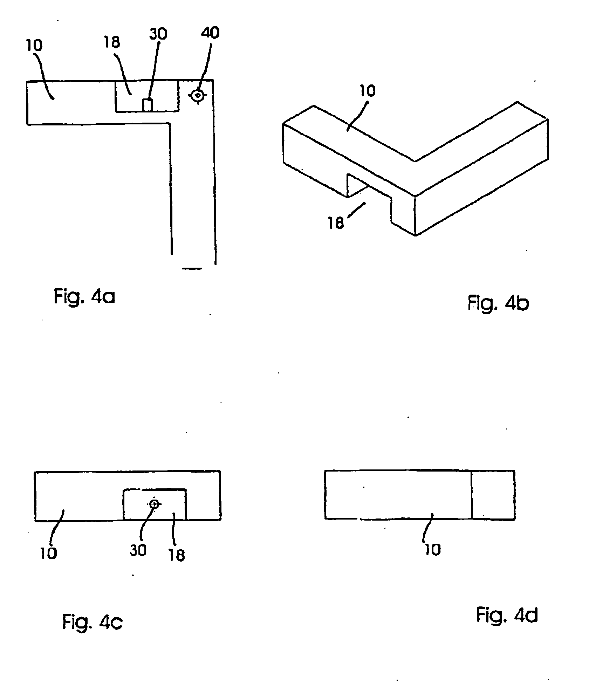

Die Fig. 4a bis 4d zeigen einen Eckbereich eines Halterahmens 10 eines Photovoltaikmoduls in verschiedenen Ansichten. Gemäß der Fig. 4a ist in den Halterahmen 10 ein senkrecht stehender Kontaktstecker 40 integriert, wie nachfolgend ausführlicher beschrieben. Angrenzend an den Kontaktstecker 40 ist die Aussparung 30 mit dem darin vorgesehenen Haltezapfen 30 angeordnet. Der Abstand zwischen dem Kontaktstecker 40 und dem Haltezapfen 30 wird dabei durch den Abstand zwischen der halbkreisförmigen Aussparung 104 (vgl. Fig. 1) und der zugeordneten Steckerbuchse 73 auf der Oberseite der Doppelbrücke 60 vorgegeben, wenn diese unmittelbar an dem Halteelement 100 anliegt.

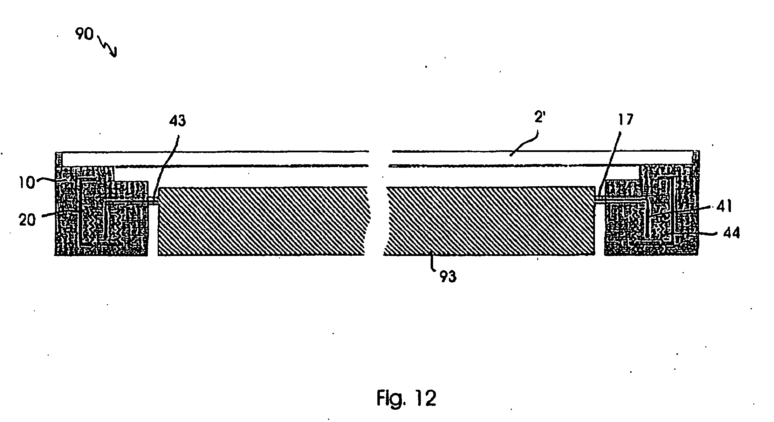

Zur Montage des Solarstromsystems wird gemäß der Fig. 1 wie folgt vorgegangen: Zunächst werden die Montageträger unter vorgegebenen Abständen, die auf die Abmessungen der Photovoltaikmodule abgestimmt sind, auf der Dach- oder Fassadenkonstruktion befestigt. Anschließend werden die Halteelemente 100 und Doppelbrücken 60 in die Montageträger 50 eingesteckt und in Position gebracht. Anschließend werden die Photovoltaikmodule, ggf. zusätzlich eines oder mehrere Wechselrichtermodule, wie nachfolgend anhand der Fig. 12 beschrieben, in der vorstehend beschriebenen Weise auf die Halteelemente 100 und die Doppelbrücken 60 aufgesetzt. In dieser Stellung können die Halteelemente 100 noch frei an den Montageträgern 50 verschiebbar sein. Gemäß einer alternativen Ausführungsformn können die Halteelemente 100 in dieser Phase jedoch bereits fest an den Montageträgern 50 befestigt sein. Anschließend wird die Lage der Photovoltaikmodule auf der Dach- oder Fassadenkonstruktion nochmals geprüft und ggf. durch Verschieben entlang den Montageträgern 50 korrigiert. Anschließend werden die Klauen 109 der Halteelemente 100 mit einem Werkzeug, das in den Spalt zwischen zwei benachbarten Photovoltaikmodulen eingreift verdreht, wodurch die Photovoltaikmodule fest mit den Halteelementen 100 verbunden werden. Anschließend wird die Position der Halteelemente 100 an den Montageträgern 50 gesichert, beispielsweise durch Festziehen der vorgenannten Senkkopfschrauben. Beim Verriegeln bzw. Verrasten der Photovoltaikmodule an den Halteelementen 100 werden die Modul mit einer durch den Verriegelungsmechanismus vorbestimmten Kraft gegen die Doppelbrücken gedrückt, sodass die Verbindungsstecker mit einer vorbestimmten Kontaktkraft zusammengesteckt werden.

Wie dem Fachmann ohne weiteres ersichtlich sein wird, können die Halteelemente 100 jederzeit wieder entriegelt werden, um die Photovoltaikmodule wieder freizugeben, oder an den Montageträgern gelöst werden, um die Position der Halteelemente 100 und Photovoltaikmodule zu korrigieren. Um eine Einleitung von Spannungen in die Photovoltaikmodule zu verringern oder zu verhindern, beispielsweise hervorgerufen durch Winddruck oder Windsog, Schneelasten, thermische Spannungen oder dergleichen, kann an den Halteelementen für einen elastischen Ausgleich gesorgt werden. Beispielsweise können die Drehachsen 109 an den Seitenwänden 101 elastisch gelagert sein, können die Drehachsen 109 und/oder die Seitenwände 101 aus einem elastischen Material ausgebildet sein, können die Klauen 109 aus einem elastischen Material ausgebildet sein, können die Haltezapfen 30 in den Halterahmen aus einem elastischen Material ausgebildet sein oder an diesen elastisch gelagert sein oder kann auf der Unterseite der Halteelemente 100 eine dauerelastische Einlage vorgesehen sein.

Wie dem Fachmann ohne weiteres ersichtlich sein wird, können zur Erzielung eines Formschlusses zur Befestigung der Photovoltaikmodute an den Montageträgern an den Halterahmen der Photovoltaikmodule auch andere Elemente vorgesehen sein, die in der bekannten Weise mit darauf abgestimmten Verriegelungs- oder Verrastungsmechanismen der Halteelemente zusammenwirken.

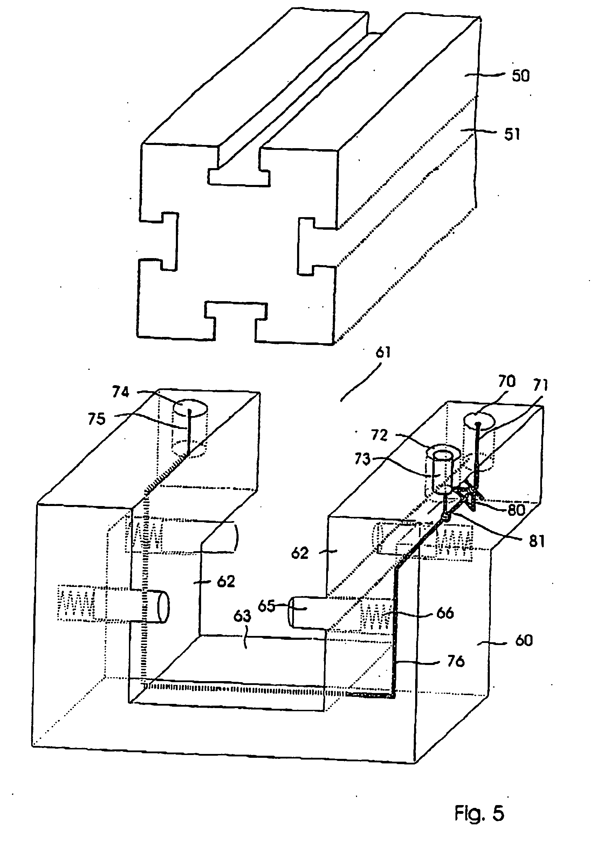

Die Fig. 5 zeigt einen als Endlosprofil ausgebildeten Montageträger mit einem Verbindungselement gemäß einer zweiten Ausführungsform der vorliegenden Erfindung. Gemäß der Fig. 5 wird der als Endlosprofil ausgebildete Montageträger 50 von einem im Querschnitt U-förmigen Verbindungselement 60 klammerartig umgriffen. In der Mitte des Verbindungselements 60 bilden die beiden von dem Boden 63 senkrecht abragenden Seitenwände 62 eine in Längsrichtung verlaufende zentrale Aufnahme 61 zum Aufnehmen des Montageträgers 50 aus. Im montierten Zustand liegen die Seitenwände 62 unmittelbär an Seitenwänden des Montageträgers 50 an. Von den Seitenwänden 62 ragen Verrastungsstifte 65, die einwärts mit Hilfe von Druckfedern vorgespannt sind. Im montierten Zustand ragen die Spitzen der Raststifte 65 in die T-Nut 51 des zugeordneten Montageträgers 50 hinein, um die Stellung des Verbindungselements 60 in Bezug zu dem Montageträger 50 zu verrasten. Dabei können in dem Montageträger 50, beispielsweise am Boden der T-Nuten 51, Indexierungs-Sackbohrungen vorgesehen sein, welche die Verrastungsstifte 65 in eine verrastete Stellung führen. Zum Verrasten werden die Verrastungsstifte 65 mit den T-Nuten 51 in EingrifT gebracht und das Verbindungselement 60 in Längsrichtung solange entlang dem Montageträger 50 verschoben, bis die Spitzen der Verrasumgsstifte 65 in die indexierungs-Sackbohrungen eingreifen. Die Abstände zwischen diesen Indexierungs-Sackbohrungen sind derart auf die Längen bzw. Breiten der Photovoltaikmodule abgestimmt, dass diese eng anliegend auf den Montageträger montiert werden können, wie nachfolgend ausführlicher beschrieben.

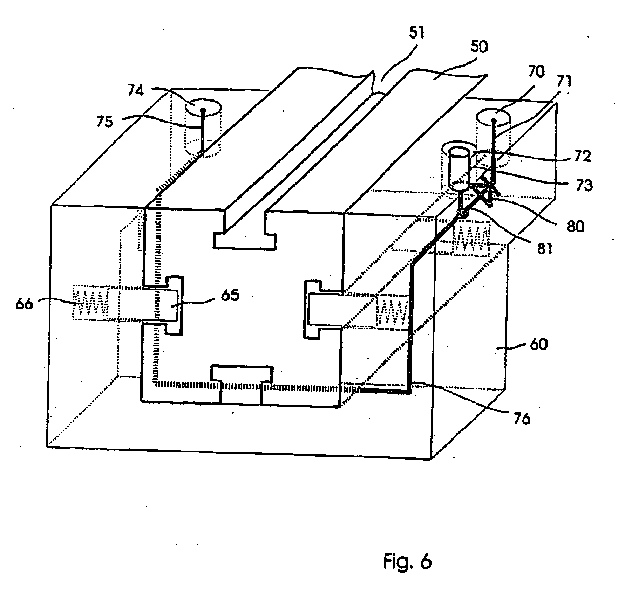

Gemäß der Fig. 5 ist auf der Oberseite des Verbindungselements 60 auf der linken Seite des Montageträgers 50 ein Anschlussstecker 74 mit einem Kontaktstift 75 vorgesehen und sind auf der rechten Seite des Montageträgers ein Anschlussstecker 70 mit einem Kontaktstift 71 sowie eine Anschlussdose 72 mit einer Kontaktbuchse 73 ausgebildet. Kontaktstift 71 und Kontaktbuchse 73 sind über eine Verbindungsleitung 81 mit einer Bypass-Diode 80 elektrische leitend miteinander verbunden. Die Bypass-Diode 80 ist so geschaltet, dass diese in Sperrrichtung betrieben wird, wenn das zugeordneten, in das Verbindungselement 60 eingesteckte Photovoltaikmodul beleuchtet wird, und so, dass das zugeordnete Photovoltaikmodul im Verschattungsfall mittels der Bypass-Diode 80 überbrückt wird. Gemäß der Fig. 5 verbindet eine weitere Leitung 76 die Anschlussdose 72 mit dem Anschlussstecker 74 auf der gegenüber liegenden Seite des Montageträgers 50. Die Fig. 6 zeigt das System gemäß der Fig. 5 in einem montierten Zustand, in welchem die Verrastungsstifte 65 in die T-Nuten 51 des Montageträgers 50 hinein ragen, um das Verbindungselement 60 gegen ein senkrechtes Abheben zu sichern.

Zur Montage eines Solarstromsystems wird gemäß der zweiten Ausführungsform wie folgt vorgegangen: Zunächst werden mehrere Montageträger, wie in der Fig. 5 gezeigt, parallel und beabstandet voneinander auf eine Dachabdeckung, Fassade oder dergleichen montiert, wobei die Abstände zwischen den Montageträgern der Länge bzw. Breite der zu montierenden Photovoltaikmodule entsprechen. Gemäß einer weiteren Ausführungsvariante können senkrecht zu dem so montierten Montageträgern weitere entsprechend ausgebildete Montageträger parallel und beabstandet zueinander verlegt werden, wobei an den Kreuzungspunkten geeignete Ausnehmungen an den Prolilen der Montageträger vorgesehen sind.

Anschließend wird für jede Ecke der zu montierenden Photovoltaikmodule ein Verbindungselement 60, wie in der Fig. 5 gezeigt, an geeigneten Positionen entlang der Länge der Montageträger montiert, und zwar bei dem Ausführungsbeispiel durch Einrasten der Verrastungsstifte in die T-Nuten des Montageträgers. Die Verbindungselemente können dabei frei beweglich in Längsrichtung entlang den Montageträgern angeordnet werden. Gemäß einer bevorzugten Ausführungsform können die Verbindungselemente nur an vorbestimmten Stellen, in Entsprechung zu den. Längen bzw. Breiten der zu montierenden Photovoltaikmodule, an den Montageträgern angebracht werden. Zu diesem Zweck können Ausrichtmittel, beispielsweise Indexierungs-Sackbohrungen, wie vorstehend beschrieben, vorgesehen sein.

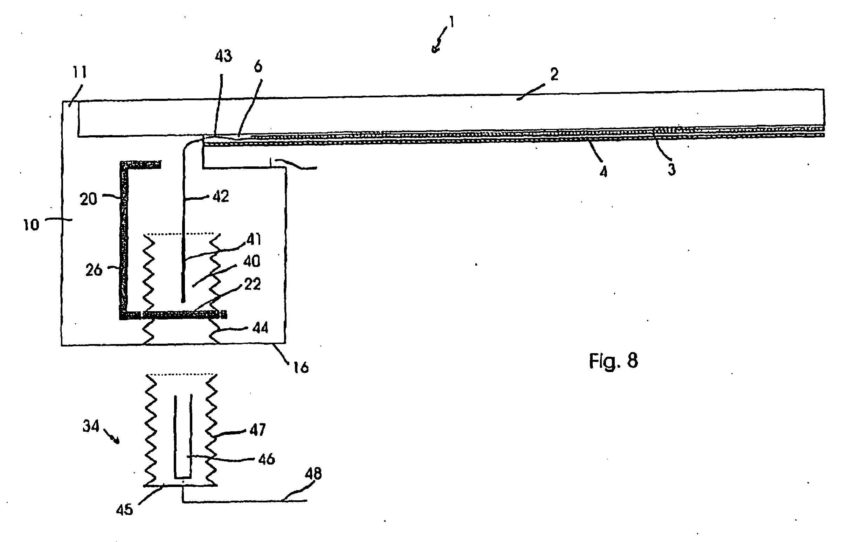

Anschließend werden die Photovoltaikmodule, die schematisch in der Fig. 8 gezeigt, auf die Verbindungselemente aufgesetzt, so dass die an der Unterseite des Halterrahmens 10 (vgl. Fig. 4) vorgesehenen Anschlussstecker 40 und/oder Steckerbuchsen in auf der Oberseite der Verbindungselemente 60 (vgl. Fig. 5) vorgesehene und korrespondierend ausgebildete Steckerbuchsen und/oder Anschlussstecker eingreifen. Dadurch wird eine elektrische Kontaktierung des aufgesteckten Photovoltaikmoduls erreicht. Durch die Verbindungsleitung 76 in dem Verbindungselement 60 wird dabei gleichzeitig eine elektrische Verbindung mit dem auf der gegenüber liegenden Seite des Montageträgers 50 aufgesteckten Photovoltaikmodul erreicht. Quer zum Montageträger einander gegenüber liegende Photovoltaikmodule können so in Reihe geschaltet werden, wobei dem gemäß der Fig. 5 auf der rechten Seite angeordneten Photovoltaikmodul eine Bypass-Diode 80 zugeordnet ist, die in Sperrrichtung betrieben wird, wenn das in der Fig. 5 auf der rechten Seite befindliche Photovoltaikmodul beleuchtet ist, und die dieses Photovoltaikmodul im Verschattungsfall überbrückt.

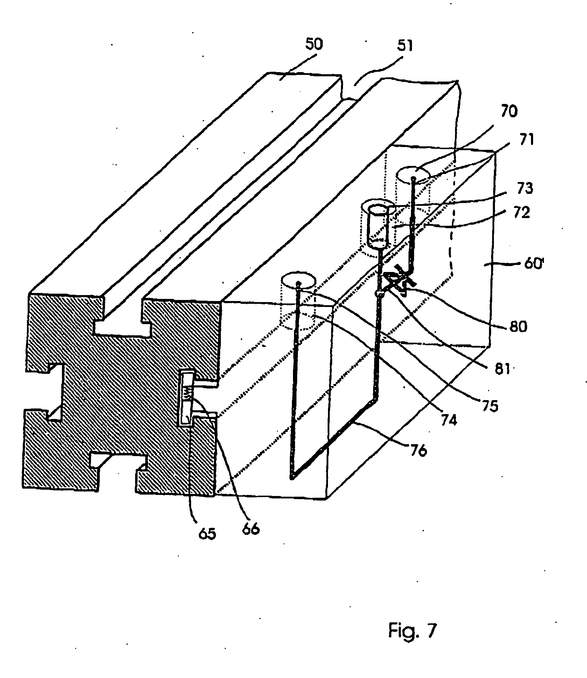

Um in Längsrichtung der Montageträger benachbarte Photovoltaikmodule miteinander so zu verbinden, dass ein zugeordnetes Photovoltaikmodul im Verschattungsfall überbrückt wird, ist gemäß der Fig. 7 ein weiterer Typ von Verbindungselement 60' vorgesehen. Bei diesem befinden sich der Anschlussstecker 74 und der Anschlussstecker 70 mit der zugeordneten Steckerbuchse 72 auf derselben Seite des Montageträgers 50 und innerhalb desselben Verbindungselements 60'. Anschlussstecker 70 und Steckerbuchse 72 sind über eine Bypass-Diode miteinander verschaltet und zur Aufnahme einer korrespondierend ausgebildeten Buchse und eines korrespondierend ausgebildeten Steckers eines ersten Photovoltaikmöduls bestimmt. Die Verbindung mit dem in Längsrichtung des Montageträgers 50 benachbarten Photovoltaikmodul erfolgt über die Verbindungsleitung 76 und den Anschlussstecker 74.

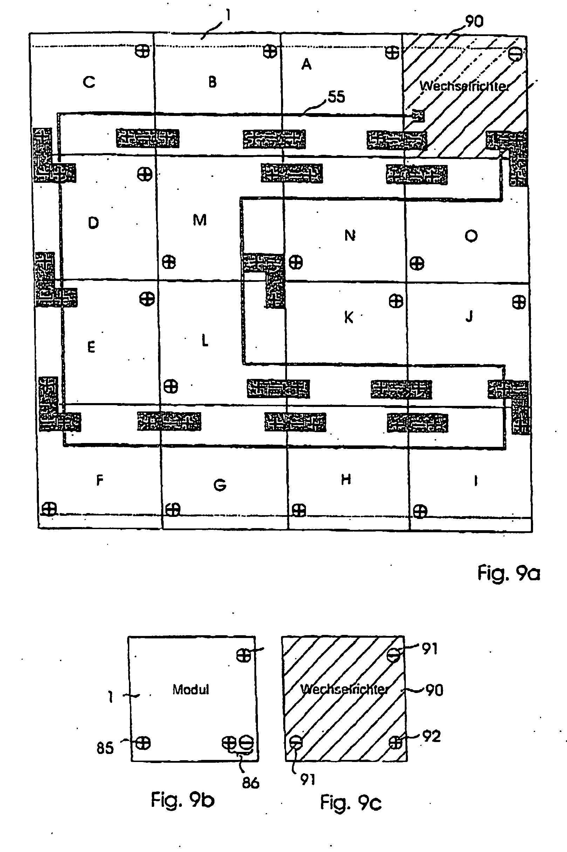

Durch geeignete geometrische Anordnung der beiden Typen von Verbindungselementen an den Montageträgern lässt sich so eine geeignete elektrische Verschaltung einer Mehrzahl von Photovoltaikmodulen erreichen, wie beispielhaft in der Fig. 9a dargestellt, Gemäß der Fig. 9a sind die mit den Buchstaben A bis O bezeichneten Photovoltaikmodule 1 in alphabetischer Reihenfolge hintereinander geschaltet. Insgesamt umfasst das Solarstromsystem fünfzehn Photovoltaikmodule 1 sowie ein Wechselrichter-Modul 90, das äußerlich im Wesentlichen identisch zu den Photovoltaikmodulen 1 ausgestaltet ist, insbesondere eine identische oder auf die benachbarten Photovoltaikmodule abgestimmte Oberflächenfarbe und gestaltung aufweist.

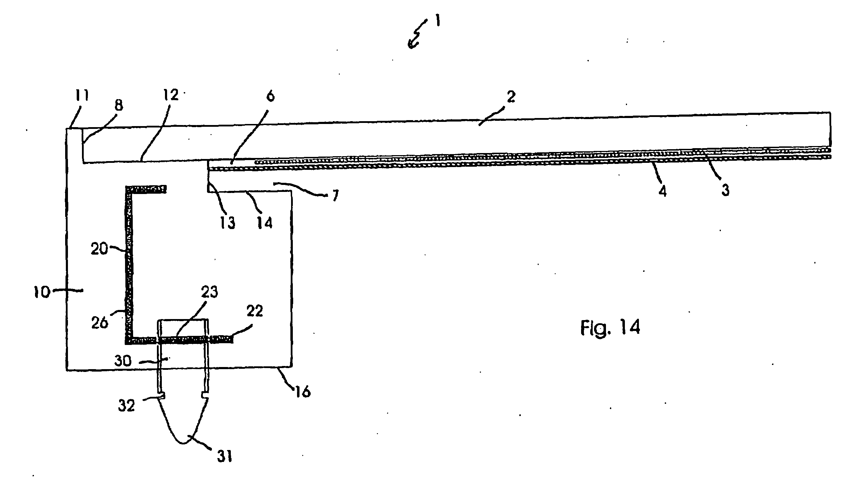

Ein solches Wechselrichter-Modul 90 ist beispielhaft in der Fig. 12 in einer Schnittansicht gezeigt. Dieses Wechsclrichter-Modul 90 weist einen mechanischen Aufbau vergleichbar zu dem in der Fig. 8 und 14 gezeigten und nachfolgend noch ausführlicher beschriebenen Photovoltaikmodul auf. Anstelle der Solarzellen ist auf der Rückseite der Abdeckscheibe 2' der eigentliche Wechselrichter 93 angeordnet, bevorzugt in ein Gehäuse oder ein Kunststoff eingekapselt. Der Rest der Rückseite der Abdeckscheibe 2' kann, wie in der Fig. 12 gezeigt, mit einem Kunststoff 17 umspritzt sein, der insbesondere einstückig mit dem Halterahmen 10 ausgebildet sein kann. Die Kontaktierung des Wechselrichters 93 erfolgt rückseitig über die Anschlussfahne 43 und den Kontaktstift 41, in der Weise, wie im Zusammenhang mit dem Photovoltaikmodul gemäß der Fig. 8 noch ausführlicher zu beschreiben sein wird.

Die elektrische Kontaktierung des Photovoltaikmoduls 1 ist in der Fig. 9b gezeigt, derzufolge ein Plus-Anschluss 85 in der rechten oberen Ecke des Moduls, ein Plus-Anschluss und ein Minus-Anschluss in der rechten unteren Ecke des Moduls und ein Plus-Anschluss 85 in der linken unteren Ecke des Moduls vorgesehen ist. Die Stecker sind dabei auf der Unterseite des Halterahmens des Moduls ausgebildet, wie beispielhaft in der Fig. 8 dargestellt. Die Anordnung der Steckverbinder ist dabei nicht spiegelsymmetrisch relativ zur Mitte des Moduls 1. Dies ermöglicht im Zusammenwirken mit Halteelementen und entsprechenden Doppelbrücken, wie vorstehend im Zusammenhang mit der ersten. Ausführungsform beschrieben, oder mit einem entsprechenden ersten oder zweiten Typ von Verbindungselement, wie vorstehend im Zusammenhang mit der zweiten Ausführungsform beschrieben, in einer ersten Drehstellung des Moduls 1 eine Verschaltung mit einem in der Fig. 9a horizontal benachbarten Photovoltaikmodul und in einer zweiten Drehstellung, nämlich um 180° verdreht, mit einem in der Fig. 9a vertikal benachbarten Photovoltaikmodul. Die beiden Drehstellungen können nicht miteinander verwechselt werden, da die Photovoltaikmodule 1 und das Wechselrichter-Modul 90 bevorzugt eine rechteckförmige Grundform aufweisen und da Anschlüsse von identischer Polarität nicht an identischen Positionen entlang von Längsseiten des Halterahmens angeordnet sind.

Gemäß der Fig. 9a ist stets der Plus-Anschluss eines Photovoltaikmoduls mit einem Minus-Anschluss eines benachbarten Photovoltaikmoduls verbunden, und zwar über ein Verbindungselement, wie in der Fig. 6 oder Fig. 7 gezeigt, wobei jedem Photovoltaikmodul eine Bypass-Diode zum Schutz zugeordnet ist, die gemäß der zweiten Ausführungsform bevorzugt in das Verbindungselement integriert ist.

Da zum Anschluss des Wechselrichter-Moduls 90 identische Verbindungselemente verwendet werden, weist auch das in der Fig. 9c gezeigte Wechselrichter-Modul 90 Steckverbinder 91, 92 an entsprechenden Stellen auf, allerdings ist eine Bypass-Diode nicht erforderlich.

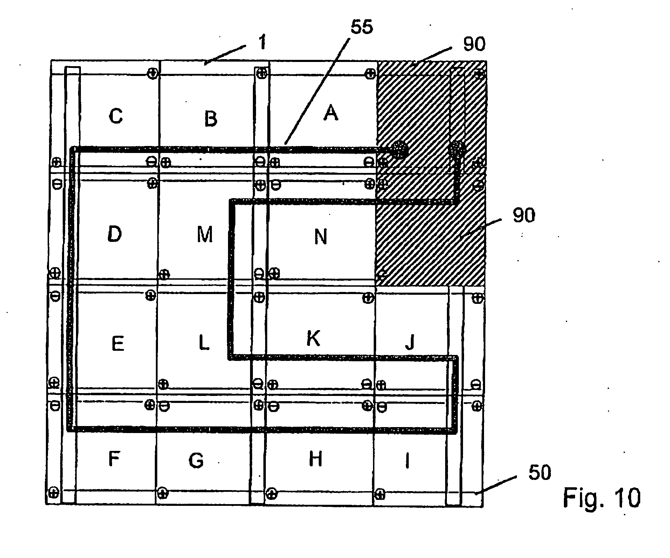

Die Fig. 10 zeigt eine elektrische Stringverschaltung von einem Wechselrichter-Modul mit fünfzehn Photovoltaikmodulen auf einer quadratischen Grundfläche gemäß einer weiteren Ausführungsform der vorliegenden Erfindung. Das zusätzlich dargestellte zweite Wechselrichter-Modul soll die optional wählbare Lage des Wechselrichter-Moduls kennzeichen, in welchem Fall das erste Wechselrichter-Modul durch ein PhotovoltaikModul ersetzt wäre.

Gemäß der Fig. 10 sind in der rechten oberen und linken unteren Ecke des Photovoltaikmoduls 1 jeweils ein Plus-Anschlüsse vorgesehen und ist in der rechten unteren Ecke des Moduls Minus-Anschluss 85 vorgesehen ist. Die Stecker sind dabei auf der Unterseite des Halterahmens des Moduls ausgebildet, wie beispielhaft in der Fig. 8 dargestellt. Die Anordnung der Steckverbinder ist dabei nicht spiegelsymmetrisch relativ zur Mitte des Moduls 1. Dies ermöglicht im Zusammenwirken mit Halteelementen und entsprechenden Doppelbrücken, wie vorstehend im Zusammenhang mit der ersten Ausführungsform beschrieben, oder mit einem entsprechenden ersten oder zweiten Typ von Verbindungselement, wie vorstehend im Zusammenhang mit der zweiten Ausführungsform beschrieben, in einer ersten Drehstellung des Moduls 1 eine Verschaltung mit einem in der Fig. 10 horizontal benachbarten Photovoltaikmodul und in einer zweiten Drehstellung, nämlich um 180° verdreht, mit einem in der Fig. 10 vertikal benachbarten Photovoltaikmodul.

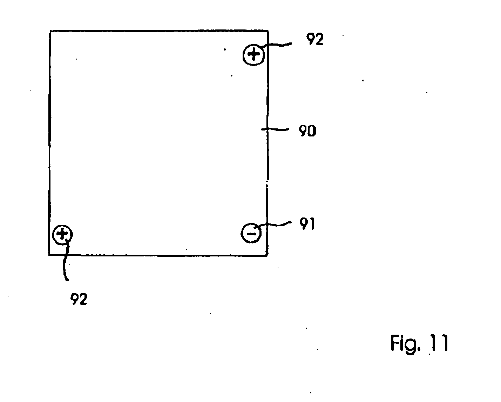

Die Fig. 11 zeigt ein für die Verschaltung gemäß der Fig. 10 ausgelegtes Wechselrichtermodul 90 mit einem Aufbau, wie vorstehend anhand der Fig. 12 beschrieben.

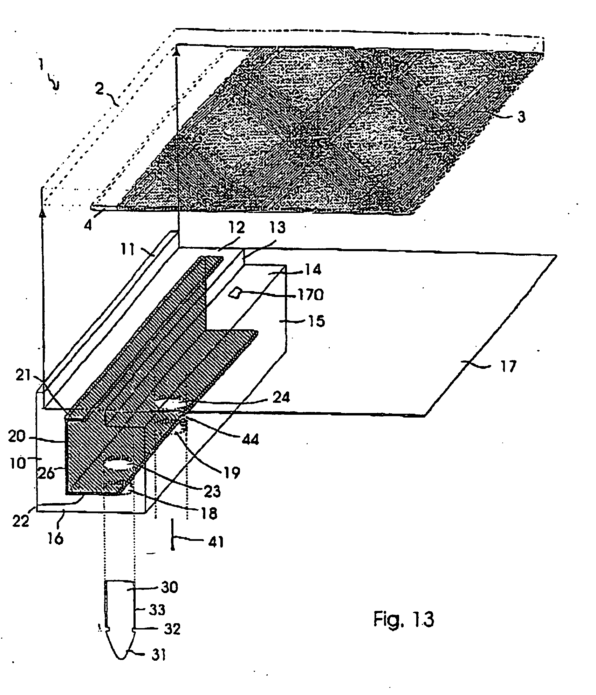

Die Fig. 13 und 14 zeigen in einer perspektivischen Explosionsdarstellung sowie in einem schematischen Teilschnitt ein Photovoltaikmodul für ein Solarstromsystem gemäß der vorliegenden Erfindung.

Gemäß der Fig. 13 umfasst das insgesamt mit dem Bezugszeichen 1 bezeichnete Photovoltaikmodul einen im Profil im Wesentlichen quaderförmigen Halterahmen 10, der ein flächige Verbundmaterial trägt, das eine transparente Abdeckscheibe 2, beispielsweise aus einem Glas oder transparenten Kunststoff, und zumindest eine Solarzelle 3, bevorzugt eine Mehrzahl von Solarzellen, umfasst, wobei zwischen der Abdeckscheibe 2 und der Solarzellen-Anordnung eine transparente Kunststoffschicht, beispielsweise aus EVA, vorgesehen ist, in die die Solarzellen 3 eingebettet sind. Die Rückseite der Solarzellen 3 kann mit einer witterongsfesten Kunststoffverbundfolie, beispielsweise aus Polyvinylfluorid und Polyester, kaschiert sein. Alternativ können die Solarzellen in einen Kunstharz eingegossen und mit der transparenten Abdeckscheibe 2 verbunden sein. Die Solarzellen 3 erstrecken sich nicht ganz bis zum Rand der transparenten Abdeckscheibe 2.

Der Halterahmen 10 aus einem Kunststoff, beispielsweise Polyurethan, ist an den Rand des vorgenannten Verbundmaterials angespritzt oder angeschäumt oder angegossen und umfasst einen vergleichsweise schmalen oberen Umfangsrand 11, der die Abdeckscheibe 2 am Rand zumindest abschnittsweise einfasst, optional umlaufend dicht einfasst, eine horizontale Abstützfläche 12, deren Breite auf den Abstand des Seitenrands des Einkapsclungsmaterials 4 zu dem Seitenrand der transparenten Abdeckscheibe 2 abgestimmt ist, eine Stufe 13, der sich ein Innenvorsprung 14 anschließt, der sich horizontal zur Innenseite des Photovoltaikmoduls erstreckt, sowie einen innenrand 15 und eine Unterseite 16, die parallel zu der Abstützfläche 12 und dem Innenvorsprung 14 ist. Zwischen der Rückseite des vorgenannten Verbundmaterials und der Oberseite des Innenvorsprungs 14 verbleibt ein Spalt, dessen Breite durch die Höhe der Stufe 13 vorgegeben ist und bei einem bevorzugten Ausfühnmgsbeispiel etwa 5,0 mm beträgt. Die Höhe des innenrands 15 beiträgt dabei bei einem bevorzugten Ausführungsbeispiel etwa 30 mm. Insgesamt fasst der Halterahmen 10 den Materialverbund am Rand ein. Gemäß der Fig. 13 ist auf die Rückseite des Materialverbunds eine Kunststofflage 17 geschäumt bzw. gespritzt, die bevorzugt aus demselben Material wie dem Material des Halterahmens 10 ausgebildet ist, also zweckmäßig aus einem elastomeren Kunststoff. Insgesamt ist die Anordnung von Solarzellen 3 hermetisch dicht eingekapselt in dem Halterahmen 10 gehalten.

Gemäß einer bevorzugten Ausführungsform (nicht gezeigt) schließt der obere Rand des Halterahmens 10 bündig mit der transparenten Abdeckscheibe 2 des Photovoltaikmoduls ab, was dem Photovoltaikmodul ein ansprechenderes Aussehen verschafft und zu einem vergleichsweise geringen Schmutzbefall und/oder Mossbefall führt.

Gemäß der Fig. 13 ist in den Haltrahmen 10 ein als Verankerungsmittel wirkendes C-förmiges Profil 20 integriert, das einen als Basisfläche wirkenden unteren Schenkel 22, einen vertikalen Verbindungsschenkel 26 und einen vergleichsweise kurzen oberen Schenkel 21 umfasst, wobei das Profil 20 zur Innenseite des Photovoltaikmodul 1 hin offen ist. Das Profil 20 erstreckt sich jeweils entlang der Längsseiten des Photovoltaikmoduls 1. Zweckmäßig sind in den Ecken des Photovoltaikmoduls 1 aneinander anstoßenden Profile 20 schräg geschnitten, so dass zwei benachbarte Profile 20 unmittelbar aneinander angrenzen können. Grundsätzlich können die Profile 20 jedoch auch Durchbrechungen aufweisen, auch in den Eckbereiche des Photovoltaikmoduls.

Gemäß der Fig. 13 sind in dem unteren Schenkel 22 an vorbestimmten Stellen Öffnungen 23, 24 ausgebildet. Wie der Zusammenschau der Figuren 13 und 14 entnommen werden kann, durchragt der Schaft eines Verbindungsstifts 30 die Öffnung 23, greift also der Verbindungsstift 30 in das Profil 20 ein. Der Verbindungsstift 30 kann beim Spritzgießen bzw. beim Schäumen des Halterahmens 10 in selbigen integriert werden. Alternativ kann der Verbindungsstift 30 nachträglich mit dem Halterahmen 10 verbunden werden, beispielsweise durch Einschrauben eines Außengewindes in den Kunststoff des Halterahmens 10 und/oder in das Profil 20. Gemäß der Fig. 13 ist das vordere Ende des Verbindungsstifts 30 mit einer konischen Spitze 31 versehen, wobei im Übergangsbereich zum Schaft eine umfänglich Rastausnehmung 32 zum Verrasten des Verbindungsstifts mit einer korrespondierend ausgebildeten Rastaufnahme eines Montagerahmens (nicht gezeigt) ausgebildet ist.

Wie dem Fachmann ohne weiteres ersichtlich sein wird, kann der Verbindungsstift 30 auch von einer Seitenfläche des Halterahmens 10 abragen und in einer in dem Halterahmen 10 ausgebildeten Aussparung angeordnet sein, wie vorstehend anhand der Fig. 1 und 4 beschrieben.

Wie dem Fachmann ohne weiteres ersichtlich sein wird, kann das vorgenannte Verankerungsmittel auch als geschlossenes Hohlprofil ausgebildet sein, das in dem Halterahmen als Verdrängungskörper wirkt und so zu einer weiteren Einsparung von Kunststoffmaterial führt. Ein solches Hohlprofil kann außerdem die Steifigkeit des Halterahmens insgesamt verbessern.

Wie den Figuren 13 und 8 entnommen werden kann, ist im Bereich der Öffnung 24 in dem Halterahmen 10 ein zylindrischer Hohlraum 40 ausgebildet, in dessen Innenraum mittig ein Kontaktstift 41 eines üblichen elektrischen Steckverbinders angeordnet isL Der Kontaktstift 41 ist dabei in das Kunststoffmaterial des Halterahmens 10 eingegossen bzw, geschäumt oder eingegossen. Der Kontaktstift 41 ist mit einem Draht 42 verbunden, der sich vertikal aufwärts erstreckt und dabei den oberen Schenkel 21 des Profils 20 passiert. Nahe der Rückseite der Abdeckscheibe 2 ist der Draht 42 abgewinkelt. Der Draht 42 geht über bzw. ist verbunden mit einer Anschlussfahne 43, die in den Seitenrand des Verbundmaterials eindringt, insbesondere in das rückseitig aufgebrachte Einkapselungsmaterial 4 eindringt, um seitlich eine Solarzelle 3 geeignet zu kontaktieren. Das Profil 20 kann auch aus einem Metall ausgebildet sein, beispielsweise als übliches Strangpressprofil.

Gemäß der Fig. 8 ist in der Umfangswand des Hohlraums 40 eine Riffelung 44 oder ein vergleichbares Formschlussgebilde ausgebildet, das beim Eingriff des vorstehend beschriebenen Steckers in eine korrespondierend ausgebildete Steckerbuchsc mit einem korrespondierend ausgebildeten Formschlussgebilde, beispielsweise einer komplementären Riffelung 47, der komplementären Steckerbuchse zusammenwirkt, um die elektrische Steckverbindung abzudichten. Der Montagerahmen ist in der Fig. 8 schematisch mit dem Bezugszeichen 34 gezeichnet und umfasst eine Mehrzahl von Montageträgern, wie vorstehend beschrieben.

Wie in der Fig. 8 schematisch angedeutet, umfasst eine Steckerbuchse in dem Montagerahmen 34 eine Steckerstiftaufnahme 46, die mittig in einer Buchse 45 angeordnet ist, wobei die Aufnahme 46 mit einem elektrischen Verbindungselement, beispielsweise einem elektrischen Verbindungskabel, verbunden ist. Das Verbindungselement 48 ist mit einer angrenzenden Steckerbuchse verbunden, mit der ein benachbartes Photovoltaikmodul oder ein benachbarter Wechselrichter beim Einstecken in den Montagerahmen eine elektrische Verbindung eingeht. Somit wird über den Montagerahmen eine geeignete Verschaltung einer Mehrzahl von Photovoltaikmodulen und ggf. mindestens eines Wechselrichters bewerkstelligt. Gemäß einer besonders bevorzugten Ausführungsform sind die vorstehend beschriebenen mechanischen Verbindungsmittel und die vorstehend beschriebenen elektrischen Verbindungsmittel auf einander gegenüberliegenden Längsseiten eines Photovoltaikmoduls an identischen Positionen vorgesehen. Dabei kann das Photovoltaikmodul eine quadratische oder rechteckförmige Grundform aufweisen. In dieser Konfiguration können die Photovoltaikmodule in unterschiedlichen Drehstellungen, beispielsweise unter 0°, 90°, 180° und 270°, in den Montagerahmens eingesteckt werden. Durch geeignete Wahl der Drehstellungen kann so eine geeignete Verschaltungsrichtung der Photovoltaikmodule bewerkstelligt werden, wie vorstehend anhand der Figuren 9 und 10 beschrieben.

Beim Einstecken eines Photovoltaikmoduls dienen die konischen Spitzen 31 der Verbindungsstille gleichzeitig auch als Ausricht- bzw. Führungsmittel, um die Photovoltaikmodule in ihre geeigneten Stellungen zu führen bzw. dort auszurichten. Dies ermöglicht eine einfache und schnelle Montage der erfindungsgemäßen Photovoltaikmodule:

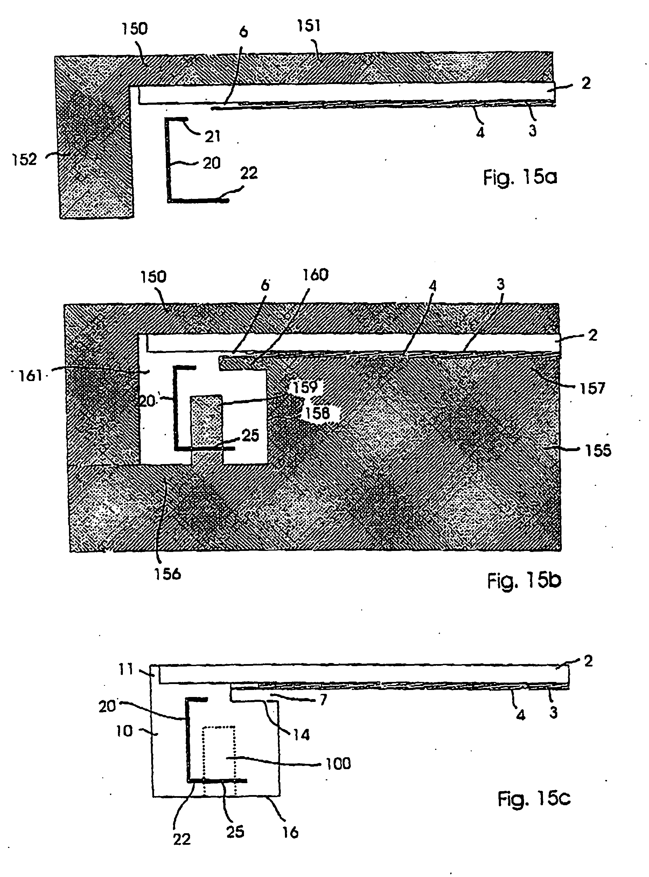

Nachfolgend wird anhand der Fig. 15a - 15c beispielhaft ein Verfahren gemäß der vorliegenden Erfindung zur Herstellung von Photovoltaikmodulen erläutert werden. Gemäß der Fig. 15a wird der eine transparente Abdeckscheibe 2 und die Solarzellen-Anordnung 3 umfassende Materialverbund auf den Boden 51 einer wannenförmigen Form 50 mit senkrecht von dem Boden abragenden Seitenwänden 52 eingebracht, so dass die Oberseite der Abdeckschcibc 2 auf dem Boden 51 anliegt. Zur Herstellung des Materialverbunds kann vorher auf die Rückseite der Abdeckscheibe 2 eine zugeschnittene Bahn EVA-Folie aufgelegt werden. Die Solarzelle werden beispielsweise im Vorfeld mittels Lötbändehen zu einzelnen Strängen verbunden und auf der Scheibe mit der EVA-Folie exakt positioniert. Anschließend werden die Querverbinder, die die einzelnen Stränge miteinander verbinden, positioniert und verlötet. Danach wird alles beispielsweise nacheinander mit einer zugeschnittenen EVA-Folie und einer Tedlar®-Folie bedeckt. Als nächster Prozessschritt erfolgt das Laminieren des Moduls bei einem Unterdruck und_etwa 150° Celsius. Beim Laminieren bildet sich so aus der bis dahin milchigen EVA-Folie eine klare, dreidimensional vernetzte und nicht mehr aufschmelzbare Kunststöffschicht, in der die Solarzellen eingebettet sind und die fest mit der Abdeckscheibe und der Rückseitenfolie verbunden ist. Alternativ kann anstelle der EVA-Folie auch eine Folie aus thermoplastischen Kunststoffen wie thermoplastischem Polyurethan (TPU) oder Polyvinylbutyral (PVB) eingesetzt werden oder können die Solarzellen auch in bekannter Weise eingesessen und mit der Abdeckscheibe verbunden werden. Anschließend wird das derart produzierte Halbzeug gemäß der Fig. 15a in eine beispielsweise wannenförmige Form 50 eingelegt.

Gemäß der Fig. 15a werden die C-förmigen Profile 20 beabstandet zu den Seitenwänden 52 der Form 50 angeordnet. Zu diesem Zweck können auf dem Boden 56 einer Gegenform 55 vertikal abragende Vorsprünge 59 als Abstandshalter zum vorübergehenden Halten der Profile 20 verwender werden. Gemäß der Fig. 15b weist die Gegenform 55 einen zentralen, erhabenen Abschnitt 57 auf, der bei dicht geschlossener Form an der Rückseite des vorgenannten Materialverbunds anliegt. Somit wird nahe den Seitenwänden der geschlossenen Form ein im Querschnitt im Wesentlichen quaderförmiger umlaufender Kanal 61 ausgebildet, in dem die Profile 20 beabstandet zu den Innenumfangswänden des Kanals 61 angeordnet sind. Von dem erhabenen Abschnitt 57 ragt ein Vorsprung 60 ab, der zur Abformung des Spalts 7 auf der Rückseite des Photovoltaikmoduls dient (vgl. Fig. 15a). Gemäß der Fig. 15b ist zwischen dem Seitenrand der Abdeckscheibe 2 und der Seitenwand 52 der Form 50 ein Spalt ausgebildet, der die Breite des oberen umlaufenden Rands 11 des Halterahmens vorgibt (vgl. Fig. 15c).

Der Halterahmen wird durch.Auffüllen des umlaufenden Kanals 61 bei geschlossener Form ausgebildet, wobei die Prozessbedingungen an sich aus dem Stand der Technik hinreichend bekannt sind und hier nicht ausführlicher angeführt werden sollen. Beispielhaft angeführt seien die Prozessbedingungen und Materialien, die in US 4,830,038, US 5,008,062, DE 198 14 652 A1, DE 198 14 653 A1 und DE 202 20 444 U1 offenbart sind, wobei der Inhalt sämtlicher vorgenannter Druckschriften zu Offenbarungszwecken in die vorliegende Anmeldung ausdrücklich mit aufgenommen sei.

Schließlich wird so der im Querschnitt in der Fig. 15c wiedergegebene Halterahmen 10 ausgebildet, welcher die Abdeckscheibe und die Anordnung von Solarzellen 3 am Rand umlaufend dicht einfasst. Nach dem Entformen des Vorsprungs 59 (vgl. Fig. 15b) verbleibt im Bereich einer Öffnung 25 in dem unteren Schenkel 22 des Profils 20 ein zylindrischer Hohlraum 100, in dem beispielsweise ein mechanisches Verbindungsmittel, wie vorstehend beschrieben, aufgenommen werden kann.

Wie der Fig. 13 entnommen werden kann, können in den Halterahmen gleichzeitig auch weitere Bauelemente integriert werden (in der Fig. 13 durch das Bezugszeichen 170 angedeutet), beispielsweise ein Sensor, ein elektronisches Bauelement, beispielsweise ein Wechselrichter oder eine Bypass-Diode, oder eine elektronische Schaltung, beispielsweise eine Schaltung mit einer Bypass- bzw. Freilaufdiode oder ein Schaltkreis zur drahtlosen Nachrichtenübermittlung etc.

### Bezugszeichenliste

- 1: Photovoltaikmodul
- 2, 2': Transparente Abdeckscheibe
- 3: Solarzelle
- 4: Einkapselungsmaterial
- 7: Aussparung
- 8: Verbindungsrand
- 10: Halterahmen
- 11: Umfangsrand
- 12: Abstützfläche
- 13: Stufe
- 14: Innenvorsprung
- 15: Innenrand
- 16: Unterseite
- 17: Rückseitige Kunststoff-Schicht
- 18: Aussparung für mechanisches Verbindungsmittel
- 19: Aussparung für elektrisches Verbindungsmittel
- 20: Verstärkungsmittel / C-Profil
- 21: Oberer Schenkel
- 22: Unterer Schenkel
- 23: Öffnung für mechanisches Verbindungsmittel
- 24: Öffnung für elektrisches Verbindungsmittel
- 25: Öffnung für Abstandshalter 59
- 26: Vertikale Verarkerungsstruktur/Verbindungsschenkel
- 30: Mechanisches Verbindung- und Ausrichtelement
- 31: Konische Spitze
- 32: Rastausnehmung
- 33: Gewinde
- 40: Anschlussstecker
- 41: Kontaktstift
- 42: Elektrisches Verbindungselement/Draht
- 43: Anschlussfahne
- 44: Formschlussgebilde
- 45: Buchse
- 46: Steckerstiftaufnahme
- 47: Formschlusselement
- 48: Elektrisches Verbindungselement
- 50: Profil des Montagerahmens
- 51: T-Nut
- 52: Seitenwand
- 53: Oberer Profilschenkel
- 55: Stringverschaltung
- 60: Anschlusskasten/Verbindungselement
- 61: Aufnahme
- 62: Seitenwand
- 63: Boden
- 65: Verrastungsmittel/Raststift
- 66: Feder
- 67: Vorsprung
- 68: Quersteg
- 70: Anschlussstecker
- 71: Kontaktstift
- 72: Anschlussdose
- 73: Kontaktbuchse
- 74: Anschlussstecker
- 75: Kontaktstift
- 76: Elektrische Verbindung
- 80: Bypass-/Freilaufdiode
- 81: Bypass-Leitung
- 85: Plus-Anschluss des Photovoltaikmoduls
- 86: +/- - Anschluss des Photovoltaikmoduls
- 90: Wechselrichter-Modul
- 91: Minus-Anschluss
- 92: Plus-Anschluss
- 93: Wechselrichter
- 100: Befestigungselement
- 101: Seitenwand
- 102: Boden
- 103: Quersteg
- 104: Zentrierungsaussparung
- 105: Drehachse
- 106: Drehklaue
- 107: Einführöffnung
- 108: Einführschräge
- 109: Verrastungsaussparung
- 110: Gekrümmter Seitensteg
- 111: Boden der Verrastungsaussparung
- 112: Außensechskantabschnitt
- 113: Bohrung
- 150: Obere Formhälfte
- 151: Boden
- 152: Seitenwand
- 155: Untere Formhälfte
- 156: Flacher Seitenrand
- 157: Zentraler erhabener Bereich
- 158: Stufe
- 159: Abstandshalter
- 160: Umfangsvorsprung
- 161: Hohlraum
- 170: Elektronisches Bauclcment/Schaltkreis
- 200: Hohlraum

## Patentansprüche

1. Photovoltaikmodul mit einem Halterahmen (10), der eine transparente Abdeckscheibe (2) mit einer Mehrzahl von Solarzellen (3) trägt, die mit der transparenten Abdeckscheibe (2) verbunden sind, wobei der Halterahmen (10) aus einem Kunststoff, bevorzugt aus einem elastomeren Kunststoff, ausgebildet ist, der Halterahmen (10) im Profil quaderförmig ist und eine äußere Seitenfläche des Halterahmens (10) rechtwinklig von einer Oberseite des Photovoltaikmoduls abragt, **dadurch gekennzeichnet, dass** ein oberer Rand des Halterahmens (10) bündig mit der transparenten Abdeckscheibe (2) abschließt.

2. Photovoltaikmodul nach Anspruch 1, wobei der Halterahmen (10) einen schmalen oberen Umfangsrand (11), der die transparente Abdeckscheibe (2) am Rand zumindest abschnittsweise einfasst, und eine Abstützfläche (12) zum Abstützen der transparenten Abdeckscheibe auf dem Halterahmen aufweist.

3. Photovoltaikmodul nach Anspruch 2, wobei die Breite der Abstützfläche (12) auf den Abstand des Seitenrands eines Einkapselungsmaterials (4) für die Mehrzahl von Solarzellen (3), das mit der transparenten Abdeckscheibe (2) verbunden ist, zu dem Seitenrand der transparenten Abdeckscheibe (2) abgestimmt ist.

4. Photovoltaikmodul nach Anspruch 2 oder 3, wobei in dem Halterahmen eine Stufe (13) vorgesehen ist, der sich ein Innenvorsprung (14) anschließt, wobei zwischen einer Rückseite der Solarzellen und der Oberseite des Innenvorsprungs ein Spalt ausgebildet ist.

5. Photovoltaikmodul nach einem der vorhergehenden Ansprüche, bei dem mechanische Verbindungsmittel (30) jeweils innerhalb einer in dem Halterahmen (10) ausgebildeten Aussparung (18) angeordnet sind, wobei die mechanischen Verbindungsmittel (30) bevorzugt von einer Seitenfläche des Halterahmens (10) abragen.

6. Photovoltaikmodul nach Anspruch 5, wobei in den Halterahmen (10) ferner ein Verankerungsmittel (20) integriert ist, das sich zumindest abschnittsweise entlang von Längsseiten des Photovoltaikmoduls (1) erstreckt, wobei die mechanischen Verbindungsmittel (30) in das Verankerungsmittel (20) eingreifen, um ein Austreißen derselben aus bzw. von dem Halterahmen zu verhindern.

7. Photovoltaikmodul nach Anspruch 6, wobei das Verankerungsmittel (20) eine Basisfläche (22) aufweist, die sich im Wesentlichen parallel zu einer von dem Materialverbund (2-4) aufgespannten Ebene erstreckt.

8. Photovoltaikmodul nach Anspruch 7, wobei das Verankerungsmittel als zur Innenseite des Photovoltaikmoduls (1) offenes Hohlprofil (20) ausgebildet ist, das vollständig unterhalb der von dem Materialverbund (2-4) aufgespannten Ebene angeordnet ist, und wobei das Hohlprofil (20) C-förmig ausgebildet ist und einen oberen Schenkel (21), der sich parallel zu einer von dem Materialverbund (2-4) aufgespannten Ebene verstreckt, und einen dazu beabstandeten und parallelen unteren Schenkel (22) aufweist, der die Basisfläche bildet.

9. Photovoltaikmodul nach Anspruch 6, wobei das Verankerungsmittel als geschlossenes Hohlprofil ausgebildet und in den Halterahmen (10) so eingegossen ist, dass Kunststoffmaterial aus dem Inneren des Hohlprofils verdrängt ist.

10. Photovoltaikmodul nach einem der Ansprüche 5 bis 9, bei dem die mechanischen Verbindungsmittel (30) und/oder einen bzw. mehrere Verbindungsstecker (40-43, 70-74) auf einander gegenüberliegenden Längsseiten des rechteckförmigen oder quadratischen Photovoltaikmoduls (1) an identischen Positionen so vorgesehen oder in den Halterahmen (10) integriert sind, dass die Photovoltaikmodule (1) wahlweise in unterschiedlichen Drehstellungen auf die Montageträger (50) montierbar sind, um eine geeignete elektrische Versehaltung der Photovoltaikmodule (1) in Entsprechung zu deren jeweiliger Drehstellung zu ermöglichen.

11. Photovoltaikmodul nach Anspruch 10, bei dem die die mechanischen Verbindungsmittel (30) und/oder der bzw. die Verbindungsstecker (40-43, 70-74) auf einander gegenüberliegenden Längsseiten des rechteckförmigen oder quadratischen Photovoltaikmoduls (1) an identischen Positionen so vorgesehen oder in den Halterahmen (10) integriert sind, dass in einer ersten Drehstellung eine elektrische Verbindung zu einem horizontal benachbarten Photovoltaikmodul (1) ausbildbar ist und in einer zweiten, unterschiedlichen Drehstellung, die bevorzugt um 180° relativ zu der ersten Drehstellung verdreht ist, eine elektrische Verbindung zu einem vertikal benachbarten Photovoltaikmodul (1) ausbildbar ist.

12. Solarstromsystem mit einer Mehrzahl von Montageträgern (50), einer Mehrzahl von Photovoltaikmodulen (1) nach einem der vorhergehenden Ansprüche, die auf die Montageträger (50) montiert sind, einer Mehrzahl von Halteelementen (60; 100) zum Halten der Photovoltaikmodule (1) an den Montageträgern (50) sowie einer Mehrzahl von elektrischen Verbindungselementen (60) zum elektrischen Verschalten der Photovoltaikmodule.

13. Solarstromsystem nach Anspruch 12, bei dem die mechanischen Verbindungsmittel (30) mit den Halteelementen (60; 100) lösbar verrastet oder verriegelt sind.

14. Solarsystem nach Solarsystem nach Anspruch 13, weiterhin umfassend ein Wechselrichter-Modul (90), das ein identisches oder abgestimmtes äußeres Erscheinungsbild wie die Photovoltaikmodule (1) aufweist und in identischer Weise auf den oder die Montageträger (50) montiert ist.

15. Solarsystem nach Anspruch 14, wobei das Wechselrichter-Modul (90) eine Abdeckscheibe (2') aufweist, die farblich abgestimmt ist auf die transparente Abdeckscheibe (2) mit der darunter befindlichen, mit einer Rückseitenfolie versehenen Solarzellenanordnung (3) eines Photovoltaikmoduls, wobei auf einer Rückseite der Abdeckschcibe (2') ein Wechselrichter (93) gehalten ist und ein Halterahmen (10) aus einem bevorzugt elastomeren Kunststoff die Abdeckscheibe (2') am Rand zumindest abschnittsweise einfaßt und die Abdeckscheibe (2') hält.

## Claims

1. A photovoltaic module comprising a holding frame (10) supporting a transparent cover plate (2) having a plurality of solar cells (3), which are connected to the transparent cover plate (3), wherein said holding frame (10) is formed of a plastic, preferably of an elastomeric plastic, a profile of said holding frame (10) is rectangular and an outer side surface of said holding frame (10) extends perpendicularly to an upper side of said photovoltaic module, **characterised in that** an upper edge of the holding frame (10) is flush with the transparent cover plate (2).

2. The photovoltaic module according to claim 1, wherein the holding frame (10) comprises an upper circumferential edge (11), which at least partially encloses an edge of the transparent cover plate (2), and a supporting surface (12) for supporting the transparent cover plate on the holding frame.

3. The photovoltaic module according to claim 2, wherein the width of the supporting surface (12) is matched to the distance of the side edge of an encapsulation material (4) for said plurality of solar cells (3), which is connected to said transparent cover plate (2), to the lateral edge of the transparent cover plate (2).

4. The photovoltaic module according to claim 2 or 3, wherein a step (13) is provided in said holding frame, which is followed by an inner projection (14), wherein a gap is formed between the rear side of the solar cells and an upper surface of the inner projection.

5. The photovoltaic module according to any of the preceding claims, wherein mechanical connecting means (30) are respectively disposed within a recess (18) formed within said holding frame (10), said mechanical connecting means (30) preferably protruding from a side surface of said holding frame (10).

6. The photovoltaic module according to claim 5, wherein an anchoring means (20) is further integrated in the holding frame (10), which extends at least in sections along longitudinal sides of the photovoltaic module (1), wherein the mechanical connecting means (30) engage in the anchoring means (20) in order to prevent them from being torn from or out of the holding frame.

7. The photovoltaic module according to claim 6, said anchoring means (20) comprising a base (22) extending substantially parallel to a plane spanned by the material composite (2-4).

8. The photovoltaic module according to claim 7, wherein said anchoring means is embodied as a hollow profile (20) open toward the inner side of the photovoltaic module (1) which is completely disposed below the plane spanned by the material composite (2-4), and wherein said hollow profile (20) is C-shaped and comprises an upper limb (21) extending parallel to a plane spanned by the material composite (2-4) and a lower limb arranged at a distance therefrom and parallel thereto (22) which forms the base.

9. The photovoltaic module according to claim 6, wherein the anchoring means is formed as a closed hollow profile and is cast into the holding frame (10) in such a way that plastic material is forced out of the interior of the hollow profile.

10. The photovoltaic module according to any of claims 5 to 9, wherein the mechanical connecting means (30) and/or the or the connecting plug or plugs (40-43, 70-74) on opposing longitudinal sides of the rectangular or square-shaped photovoltaic module (1) are provided at identical positions and integrated into the holding frame (10) in such a way that the photovoltaic modules (1) can be optionally mounted in different rotational positions on the mounting supports (50) in order to enable a suitable electric interconnection of the photovoltaic modules (1) in correspondence to their respective rotational position.

11. The photovoltaic module according to claim 10, wherein the mechanical connecting means (30) and/or the connecting plug or plugs (40-43, 70-74) are provided on opposing longitudinal sides of the rectangular or square-shaped photovoltaic module (1) at identical positions and are integrated into the holding frame (10) in such a way that, in a first rotational position, an electric connection to a horizontal adjacent photovoltaic module (1) can be established and, in a second, different rotational position, which is preferably rotated 180° relative to the first rotational position, an electric connection to a vertically adjacent photovoltaic module (1) can be established.

12. A solar power system comprising a plurality of mounting supports (50), a plurality of photovoltaic modules (1) according to any of the preceding claims, which are mounted on the mounting supports (50), a plurality of holding elements (60, 100) for holding the photovoltaic modules (1) on the mounting supports (50) and a plurality of electric connecting elements (60) for electrically interconnecting the photovoltaic modules.

13. The solar power system as claimed in claim 12, wherein the mechanical connecting means (30) are detachably latched or interlocked to the holding elements (60; 100).

14. The solar power system as claimed in claim 13, further comprising an inverter module (90) with an external appearance identical or adapted to that of the photovoltaic modules (1) and mounted in an identical way on the mounting support or supports (50).

15. The solar power system as claimed in claim 14, wherein inverter module (90) comprises a cover plate (2') which is colour-matched to the transparent cover plate (2) with the underlying solar cell arrangement (3) of a photovoltaic module provided with a rear film, with an inverter (93) being held on a rear side of the cover plate (2') and a holding frame (10) made of a preferably elastomeric plastic bordering the cover plate (2') at the edge at least in sections and holding the cover plate (2').

## Revendications

1. Un module photovoltaïque comportant une armature de maintien (10) soutenant une plaque de couverture transparente (2) ayant une pluralité de cellules solaires (3), qui sont connectées à la plaque de couverture transparente (3), dans lequel ladite armature de maintien (10) est formée d'un plastique, de préférence un plastique élastomère, un profil de ladite armature de maintien (10) étant rectangulaire et une surface latérale extérieure de ladite armature de maintien (10) s'étendant perpendiculairement à un côté supérieur dudit module photovoltaïque, **caractérisé en ce qu'**un bord supérieur de l'armature de maintien (10) est affleuré avec la plaque de couverture transparente (2).

2. Le module photovoltaïque selon la revendication 1, dans lequel l'armature de maintien (10) comporte un bord circonférentiel supérieur (11), qu'entoure au moins partiellement un bord de la plaque de couverture transparente (2), et une surface de soutien (12) pour soutenir la plaque de couverture transparente sur l'armature de maintien.

3. Le module photovoltaïque selon la revendication 2, dans lequel la largeur de la surface de soutien (12) correspond à la distance du bord latéral d'un élément d'encapsulage (4) pour ladite pluralité de cellules solaires (3), lesquelles sont connectées à ladite plaque de couverture transparente (2), au bord latéral de la plaque de couverture transparente (2).

4. Le module photovoltaïque selon la revendication 2 ou 3, dans lequel une marche (13) est disposée dans ladite armature de soutien, qui est suivie d'une projection intérieure (14), dans lequel un espace est formé entre le côté arrière des cellules solaires et une surface supérieure de la projection intérieure.

5. Le module photovoltaïque selon l'une quelconque des revendications précédentes, dans lequel des moyens de connexion mécaniques (30) sont respectivement disposés au sein d' une cavité (18) formée au sein de ladite armature de maintien (10), lesdits moyens de connexion mécaniques (30) se projetant de préférence depuis une surface latérale de ladite armature de maintien (10).

6. Le module photovoltaïque selon la revendication 5 dans lequel un élément d'ancrage (20) est intégré dans l'armature de maintien (10), s'étendant au moins en sections le long des côtés longitudinaux du module photovoltaïque (1), dans lequel les moyens de connexion mécaniques (30) s'engages dans le moyen d'ancrage (20) afin d'empêcher toute déchirure depuis et hors l'armature de maintien.

7. Le module photovoltaïque selon la revendication 6, ledit élément d'ancrage comportant une base (22) s'étendant de manière substantiellement parallèle à un plan porté par le matériau composite (2-4).

8. Le module photovoltaïque selon la revendication 7, dans lequel ledit élément d'ancrage est réalisé sous forme d'un profil creux (20) ouvert vers le côté intérieur du module photovoltaïque (1), qui est disposé entièrement sous le plan porté par le matériau composite (2-4), et dans lequel ledit profil creux (20) présente une forme en C et comporte une branche supérieure (21) s'étendant de manière parallèle à un plan porté par le matériau composite (2-4) et une branche inférieure disposée à une distance relative à celui-ci et parallèle (22) formant la base.

9. Le module photovoltaïque selon la revendication 6, dans lequel l'élément d'ancrage présente la forme d'un profil creux fermé et est coulé au sein de l'armature de maintien (10) de telle façon que le matériau plastique est contraint hors de l'intérieur du profile creux.

10. Le module photovoltaïque selon l'une quelconque des revendications 5 à 9, dans lequel les moyens de connexion mécaniques (30) et/ou le ou les connecteurs (40-43, 70-74) sur les côtés longitudinaux opposés du module photovoltaïque de forme rectangulaire ou carrée sont disposées dans des positions identiques et intégrés au sein de l'armature de maintien (10) de telle manière que les modules photovoltaïques peuvent être montés optionnellement en différentes positions rotationnelles sur les supports de montage (50) afin de permettre une connexion électrique appropriée des modules photovoltaïques (1) en correspondance à leur position respective en rotation.

11. Le module photovoltaïque selon la revendication 10, dans lequel les moyens de connexion mécaniques (30) et/ou le ou les connecteurs (40-43, 70-74) sont disposés sur les côtés longitudinaux opposés du module photovoltaïque de forme rectangulaire ou carré, à des positions identiques et sont intégrés à l'armature de maintien (10) de telle manière que, suivant une première position en rotation, peut être établie une connexion électrique à un module photovoltaïque horizontal adjacent, qui est de préférence orientée de 180° par rapport à la première position en rotation, une connexion électrique à un module photovoltaïque vertical adjacent (1) peut être établie.

12. Un système solaire de production d'électricité comprenant une pluralité de supports de maintien (50), une pluralité de modules photovoltaïques (1) suivant l'une quelconque des revendications précédentes, lesquels sont montés sur les supports de maintien (50), une pluralité d'éléments de maintien (60, 100) pour maintenir les modules photovoltaïques (1) sur les supports de maintien (50) et une pluralité d'éléments de connexion électrique (60) pour l'interconnexion électrique des modules photovoltaïques.

13. Le système solaire de production d'électricité selon la revendication 12, dans lequel les moyens de connexion mécaniques (30) sont bloqués de manière déverrouillable ou blockés aux élements de maintien (60, 100).

14. Le système solaire de production d'électricité selon la revendication 13, comprenant en outre un module d'inversion (90) ayant une apparence extérieure identique ou adaptée à celles des modules photovoltaïques (1) et monté d'une manière identique sur le ou les support(s) de maintien.

15. Le système solaire de production d'électricité selon la revendication 14, dans lequel le module d'inversion (90) comporte une plaque de couverture (2') de couleur correspondante à la plaque de couverture transparente (2) avec la disposition de cellule solaire sous-jacente (3) d'un module photovoltaïque disposé avec un film arrière, avec un inverseur (93) tenu sur le côté arrière de la plaque de couverture (2') et une armature de maintien (10) de préférence réalisée en matière plastique entourant la plaque de couverture (2') au moins en sections sur le bord et maintenant la plaque de couverture (2').
